(19) Europäisches Patentamt
European Patent Office
Office européen des brevets

(11) **EP 2 906 915 B1**

## (12) EUROPÄISCHE PATENTSCHRIFT

(45) Veröffentlichungstag und Bekanntmachung des Hinweises auf die Patenterteilung:
**20.04.2022  Patentblatt 2022/16**

(21) Anmeldenummer: **13766052.8**

(22) Anmeldetag: **23.09.2013**

(51) Internationale Patentklassifikation (IPC):
**G01F 25/00** *(2022.01)*    **G01F 1/84** *(2006.01)*
**G01F 15/02** *(2006.01)*

(52) Gemeinsame Patentklassifikation (CPC):
**G01F 1/849; G01F 1/8436; G01F 1/8495;**
**G01F 15/02; G01F 25/10**

(86) Internationale Anmeldenummer:
**PCT/EP2013/069672**

(87) Internationale Veröffentlichungsnummer:
**WO 2014/056709 (17.04.2014 Gazette 2014/16)**

(54) **MESSSYSTEM ZUM ERMITTELN EINES VOLUMENDURCHFLUSSES UND/ODER EINER VOLUMENDURCHFLUSSRATE EINES IN EINER ROHRLEITUNG STRÖMENDEN MEDIUMS**

MEASURING SYSTEM FOR DETERMINING A VOLUME FLOW AND/OR A VOLUME FLOW RATE OF A MEDIUM FLOWING IN A PIPE LINE

SYSTÈME DE MESURE POUR DÉTERMINER UN DÉBIT VOLUMIQUE ET/OU UN POURCENTAGE DE DÉBIT VOLUMIQUE D'UN FLUIDE S'ÉCOULANT DANS UNE TUYAUTERIE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **11.10.2012  DE 102012109708**
**12.10.2012  DE 102012109729**

(43) Veröffentlichungstag der Anmeldung:
**19.08.2015  Patentblatt 2015/34**

(60) Teilanmeldung:
**22154559.3**

(73) Patentinhaber: **Endress+Hauser Flowtec AG**
**4153 Reinach (BL) (CH)**

(72) Erfinder:
• **KIRST, Michael**
**79539 Lörrach (DE)**
• **RIEDER, Alfred**
**84032 Landshut (DE)**

(74) Vertreter: **Andres, Angelika Maria**
**Endress+Hauser Group Services**
**(Deutschland) AG+Co. KG**
**Colmarer Straße 6**
**79576 Weil am Rhein (DE)**

(56) Entgegenhaltungen:
**EP-A1- 1 426 741    WO-A1-2006/091199**
**US-A- 5 661 232**

**Beschreibung**

Die Erfindung betrifft ein Meßsystem zum Ermitteln eines Volumendurchflusses, nämlich eines während eines vorgebbaren oder vorab bestimmten Meßintervalls insgesamt geflossenen Volumens, und/oder einer Volumendurchflußrate eines in einer Rohrleitung, insb. zumindest zeitweise mit einer Massendurchflußrate von mehr als 100 t/h, strömenden Mediums, insb. einer Flüssigkeit oder eines Gases.

In der Prozeßmeß- und Automatisierungstechnik werden für die Messung physikalischer Parameter, wie z.B. dem Massedurchfluß bzw. der Massendurchflußrate, dem Volumendurchfluß bzw. der Volumendurchflußrate, sowie der Dichte und/oder der Viskosität, von in Rohrleitungen strömenden Medien oftmals solche - zumeist als In-Line-Meßgeräte in Kompaktbauweise ausgebildeten - Meßsysteme verwendet, die mittels eines vom Medium durchströmten Meßaufnehmers vom Vibrationstyp und einer daran angeschlossenen Meß- und Treiberschaltung, im Medium Reaktionskräfte, wie z.B. mit dem Massedurchfluß korrespondierende Corioliskräfte, mit der Dichte des Mediums korrespondierende Trägheitskräfte und/oder mit der Viskosität des Mediums korrespondierende Reibungskräfte etc., bewirken und von diesen abgeleitet ein den jeweiligen Massedurchfluß, die jeweilige Viskosität und/oder ein die jeweilige Dichte des Mediums repräsentierendes Meßsignal erzeugen. Derartige, insb. als Coriolis-Massedurchflußmesser oder Coriolis-Massedurchfluß-/Dichtemesser ausgebildete, Meßaufnehmer bzw. damit gebildete Meßsysteme sind z.B. in der CN-A 10 18 58 765, der EP-A 1 001 254, der EP-A 816 807, der EP-A 553 939, der US-A 2002/0157479, der US-A 2006/0150750, der US-A 2006/0162468, der US-A 2007/0151368, der US-A 2008/0047361, der US-A 2010/0242623, der US-A 2011/0016991, der US-A 2011/0146416, der US-A 2011/0154914, der US-A 2011/0265580, der US-2011/0113896, der US-A 2012/0048034, der US-A 2012/0073384, der US-A 2012/0079891, der US-A 2012/0090407, der US-A 2012/0109543, der US-A 2012/0167697, der US-A 47 77 833, der US-A 47 93 191, der US-A 48 01 897, der US-A 48 23 614, der US-A 48 79 911, der US-A 50 09 109, der US-A 50 24 104, der US-A 50 50 439, der US-A 53 70 002, der US-A 56 61 232, der US-A 57 96 011, der US-A 58 04 741, der US-A 63 11 136, der US-B 63 08 580, der US-B 63 11 136, der US-B 64 15 668, der US-B 67 11 958, der US-B 69 20 798, der US-B 71 34 347, der US-B 73 92 709, der US-B 79 92 452, der WO-A 00/57141, der WO-A 01/067052, der WO-A 03/027616, der WO-A 2008/039203, der WO-A 2011/008307, der WO-A 2011/008308, der WO-A 2011/019344, der WO-A 2011/068500, der WO-A 2012/028425, der WO-A 90/15309, der WO-A 90/15310, der WO-A 94/21999, der WO-A 96/05484, der WO-A 97/33150, der WO-A 98/038479 oder auch der nicht vorveröffentlichten deutschen Patentanmeldung 102011089808.5 ausführlich und detailliert beschrieben.

Jeder der Meßaufnehmer weist ein Gehäuse auf, von dem ein einlaßseitiges erstes Gehäuseende zumindest anteilig mittels eines wenigstens zwei jeweils voneinander beabstandeten kreiszylindrische oder kegelförmige Strömungsöffnungen aufweisenden ersten Strömungsteiler und ein auslaßseitiges zweites Gehäuseende zumindest anteilig mittels eines wenigstens zwei jeweils voneinander beabstandeten Strömungsöffnungen aufweisenden zweiten Strömungsteilers gebildet sind. Bei einigen der in der US-A 57 96 011, der US-B 73 50 421, der US-A 2007/0151368, US-A 2011/0146416, US-A 2011/0146416 oder z.B. der US-A 2011/0265580 gezeigten Meßaufnehmern umfaßt das Gehäuse ein eher dickwandiges kreiszylindrisches Rohrsegment, das zumindest ein Mittelsegment nämlichen Gehäuses bildet.

Zum Führen des zumindest zeitweise strömenden, ggf. auch mehrphasigen, Mediums umfassen die Meßaufnehmer desweiteren jeweils zwei - im Falle etwa der US-A 2011/0146416, US-A 2011/0146416 bzw. US-A 2011/0265580 immerhin vier- strömungstechnisch parallel geschaltete Meßrohre aus Metall, insb. Stahl oder Titan, die innerhalb des Gehäuses des plaziert und darin - unter Bildung eines, gelegentlich auch als Innenteil bezeichneten, Vibrationselements - mittels vorgenannter Strömungsteiler schwingfähig gehaltert sind. Ein erstes der baugleichen und zueinander parallel verlaufenden Meßrohre mündet mit einem einlaßseitigen ersten Meßrohrende in eine erste Strömungsöffnung des einlaßseitigen ersten Strömungsteilers und mit einem auslaßseitigen zweiten Meßrohrende in eine erste Strömungsöffnung des auslaßseitigen zweiten Strömungsteilers und ein zweites der Meßrohre mündet mit einem einlaßseitigen ersten Meßrohrende in eine zweite Strömungsöffnung des ersten Strömungsteilers und mit einem auslaßseitigen zweiten Meßrohrende in eine zweite Strömungsöffnung des zweiten Strömungsteilers. Im Falle der US-A 2011/0146416, US-A 2011/0146416 bzw. US-A 2011/0265580 münden darüberhinaus ein drittes der Meßrohre mit einem einlaßseitigen ersten Meßrohrende in eine dritte Strömungsöffnung des ersten Strömungsteilers und mit einem auslaßseitigen zweiten Meßrohrende in eine dritte Strömungsöffnung des zweiten Strömungsteilers sowie ein viertes der Meßrohre mit einem einlaßseitigen ersten Meßrohrende in eine vierte Strömungsöffnung des ersten Strömungsteilers und mit einem auslaßseitigen zweiten Meßrohrende in eine vierte Strömungsöffnung des zweiten Strömungsteilers. Jeder der Strömungsteiler weist ferner jeweils einen Anschlußflansch mit einer Dichtfläche zum fluiddichten Anschließen des Meßaufnehmers an ein dem Zuführen von Medium bzw. dem Abführen von Medium vom Meßaufnehmer dienendes Leitungssegment der Rohrleitung auf.

Die Meßrohre, mithin das damit gebildete Vibrationselement, werden zum Erzeugen oben genannter Reaktionskräfte, angetrieben von wenigstens einem dem Erzeugen bzw. Aufrechterhalten von mechanischen Schwingungen, insb. von Biegeschwingungen, der Meßrohre im sogenannten Antriebs- oder Nutzmode dienenden Schwingungserreger, im Betrieb vibrieren gelassen. Die Schwingungen im Nutzmode (Nutzmode-Schwingungen) sind zumeist, insb. bei Verwendung des Meßaufnehmers als Coriolis-Massedurchfluß- und/oder Dichtemesser, zumindest anteilig als laterale Biege-Schwingungen jedes der Meßrohre jeweils um eine gedachte Schwingungsachse ausgebildet und im Falle von durch die Meßrohre hindurchströmendem Medium infolge von darin induzierten Corioliskräften durch zusätzliche, frequenzgleiche Schwingungen im sogenannten Coriolismode überlagert (Coriolismode-Schwingungen). Dementsprechend ist die - hier zumeist elektrodynamische - Erregeranordnung im Falle gerader Meßrohre, beispielsweise gemäß der US-A 56 61 232, derart ausgebildet, daß damit die wenigstens zwei Meßrohre im Nutzmode zumindest anteilig, insb. auch überwiegend, zu gegengleichen, mithin gegengleichen, Biegeschwingungen in einer gemeinsamen Schwingungsebene differentiell - also durch Eintrag gleichzeitig entlang einer gemeinsamen Wirkungslinie, jedoch in entgegengesetzter Richtung wirkender Erregerkräfte - anregbar sind.

Zum Erfassen von Vibrationen des Vibrationselements, insb. von mittels der Erregeranordnung angeregten Biegeschwingungen der Meßrohre, und zum Erzeugen von Vibrationen des Vibrationselements repräsentierenden Schwingungsmeßsignalen weisen Meßaufnehmer der vorgenannten Art ferner jeweils eine auf relative Bewegungen eines oder mehrerer der Meßrohre reagierende, zumeist ebenfalls elektrodynamische Vibrationssensoranordnung auf. Typischerweise ist die Vibrationssensoranordnung mittels eines einlaßseitigen, Schwingungen der Meßrohre differentiell - also lediglich relative Bewegungen der Meßrohre - erfassenden Schwingungssensors sowie eines auslaßseitigen, Schwingungen der Meßrohre differentiell erfassenden Schwingungssensors gebildet ist, wobei jeder ein von Vibrationen des Vibrationselements abhängiges Schwingungssignal generiert, das eine der momentanen Schwingungsfrequenz des Vibrationselements entsprechende Signalfrequenz aufweist, derart, daß zwischen dem Schwingungssignal des einlaßseitigen Schwingungssensors und dem Schwingungssignal des auslaßseitigen Schwingungssensors eine von der momentanen Massendurchflußrate abhängige, relative Phasendifferenz existiert. Jeder der üblicherweise einander baugleichen Schwingungssensoren ist mittels eines am ersten Meßrohr gehalterten Permanentmagneten und einer von dessen Magnetfeld durchfluteten, am zweiten Meßrohr gehalterten Zylinderspule gebildet ist.

Im Betrieb wird das vorbeschriebene, mittels der wenigstens zwei Meßrohre gebildete Vibrationselement des Meßaufnehmers mittels der elektro-mechanischen Erregeranordnung zumindest zeitweise im Nutzmode zu mechanischen Schwingungen auf wenigstens einer dominierenden Nutz-Schwingungsfrequenz angeregt. Als Schwingungsfrequenz für die Schwingungen im Nutzmode wird dabei üblicherweise eine natürliche momentane Resonanzfrequenz des Vibrationselements gewählt, die wiederum im wesentlichen sowohl von einer, u.a. durch Größe, Form und Material des Vibrationselements bestimmten, Eigenfrequenz des Vibrationselements als auch von einer momentanen Dichte des das Vibrationselement kontaktierenden Mediums abhängig ist; ggf. kann diese Nutz-Schwingungsfrequenz auch von einer momentanen Viskosität des Mediums signifikant beeinflußt sein. Infolge schwankender Dichte des zu messenden Mediums und/oder infolge von im Betrieb vorgenommen Mediumswechseln ist die Nutz-Schwingungsfrequenz im Betrieb des Meßaufnehmers naturgemäß zumindest innerhalb eines kalibrierten und insoweit vorgegebenen Nutz-Frequenzbandes determiniert veränderlich, das entsprechend eine vorgegebene untere und eine vorgegebene obere Grenzfrequenz aufweist. Basierend auf der aktuell angeregten, nämlich einer momentanen Resonanzfrequenz des Vibrationselements entsprechenden Nutz-Schwingungsfrequenz können dementsprechend mit solchen Meßsystemen auch die Dichte des Mediums bzw. in basierend auf einer Kombination von der Nutz-Schwingungsfrequnez und der erwähnten Phasendifferenz zwischen den Schwingungssignalen der Schwingungssensoren auch eine Volumendurchflußrate bzw. ein Volumendurchfluß ermittelt werden. Zum Definieren einer freie Schwinglänge der Meßrohre und damit einhergehend zum Justieren des Nutzfrequenzbandes umfassen Meßaufnehmer der vorbeschriebenen Art ferner zumeist wenigstens ein einlaßseitiges Kopplerelement zum Bilden von einlaßseitigen Schwingungsknoten für gegengleiche Vibrationen, insb. Biegeschwingungen, beider Meßrohre, das von beiden Strömungsteilern beabstandet an beiden Meßrohren fixiert ist, sowie wenigstens ein auslaßseitiges Kopplerelement zum Bilden von auslaßseitigen Schwingungsknoten für gegengleiche Vibrationen, insb. Biegeschwingungen, der Meßrohre, das sowohl von beiden Strömungsteilern als auch vom einlaßseitigen Kopplerelement beabstandet an beiden Meßrohren fixiert ist. Mittels der Kopplerelementen kann zudem auch eine Schwingungsgüte des Innenteils wie auch die Empfindlichkeit des Meßaufnehmers insgesamt beeinflußt werden.

Der jeweilige Meßaufnehmer ist ferner mit einer der Auswertung des wenigstens einen Schwingungsmeßsignals und der Generierung entsprechender, beispielsweise die Massedurchflußrate, die Volumendurchflußrate oder die Dichte repräsentierender, Meßwerte dienenden Meß- und Betriebselektronik des Meßsystems verbunden. Bei modernen Meßsystemen in Rede stehenden Art sind solche Meß- und Betriebselektroniken, wie beispielsweise in der eingangs erwähnten US-B 63 11 136 beschrieben, zumeist mittels eines oder mehreren, ggf. auch als digitalen Signalprozessor (DSP) ausgebildeten Mikroprozessoren realisiert. Neben der Auswertung der Schwingungsmeßsignal dient die Meß- und Betriebselektronik auch dazu, wenigstens ein, beispielsweise harmonisches und/oder getaktetes, Treibersignal für den wenigstens einen auf das Vibrationselement einwirkenden Schwingungserreger zu generieren, wobei das Treibersignal ein als breitbandiges Signal mit einer eine Signalkomponente mit einer zur Resonanzfrequenz des Vibrationskörper passenden Signalfrequenz oder beispielsweise auch als ein eher schmalbandiges oder harmonisches Signal mit einer einzigen dominierenden Signalkomponente von passender Signalfrequenz ausgebildet sein kann. Nämliche Signalkomponente bzw. das Treibersignal insgesamt können beispielsweise auch hinsichtlich einer Stromstärke und/oder einer Spannungshöhe geregelt sein. Bei Meßsystemen der in Rede stehenden Art ist die Meß- und Betriebselektronik zumeist innerhalb wenigstens eines vergleichsweise robusten, insb. schlag-, druck-, und/oder wetterfesten, Elektronik-Gehäuse untergebracht. Das Elektronik-Gehäuse kann beispielsweise vom Meßaufnehmer entfernt angeordnet und mit diesem nur über eine flexible Leitung verbunden sein; es kann aber auch, wie z.B. auch in den eingangs erwähnten US-A 57 96 011 gezeigt, direkt am Meßaufnehmer oder einem den Meßaufnehmer, mithin dessen Vibrationskörper separat einhausenden Meßaufnehmer-Gehäuse angeordnet sein. Darüberhinaus ist aber, wie u.a. in der WO-A 01/29519 oder der US-A 56 61 232 gezeigt, auch durchaus üblich, ggf. auch in zwei oder mehr separaten Gehäuse-Modulen untergebrachte, modular ausgebildeten Elektroniken zur Bildung von Meßsystem der in Rede stehenden Art zu verwenden. Üblicherweise ist die jeweilige Meß- und Betriebselektronik ferner über entsprechende elektrische Leitungen an ein vom jeweiligen Meßsystem zumeist räumlich entfernt angeordnetes und zumeist auch räumlich verteiltes übergeordneten elektronischen Datenverarbeitungssystem elektrisch angeschlossen, an das die vom jeweiligen Meßsystem erzeugten Meßwerte mittels eines diese entsprechend tragenden Meßwertesignals zeitnah weitergegeben werden. Meßsysteme der in Rede stehenden Art der beschriebenen Art sind zudem üblicherweise mittels eines innerhalb des übergeordneten Datenverarbeitungssystems vorgesehenen Datenübertragungsnetzwerks miteinander und/oder mit entsprechenden elektronischen Prozeß-Steuerungen verbunden, beispielsweise vor Ort installierte Speicherprogrammierbare Steuerungen oder in einer entfernten Leitwarte installierte Prozeß-Leitrechnern, wohin die mittels des jeweiligen Meßsystems erzeugten und in geeigneter Weise digitalisierten und entsprechend codierten Meßwerte weitergesendet werden. Mittels solcher Prozeß-Leitrechner können die übertragenen Meßwerte weiterverarbeitet und als entsprechende Meßergebnisse z.B. auf Monitoren visualisiert und/oder in Steuersignale für andere als Stellgeräte ausgebildete Feldgeräte, wie z.B. Magnet-Ventile, Elektro-Motoren etc., umgewandelt werden. Da moderne Meßsysteme zumeist auch direkt von solchen Leitrechnern aus überwacht und gegebenenfalls gesteuert und/oder konfiguriert werden können, werden in entsprechender Weise über vorgenannte, zumeist hinsichtlich der Übertragungsphysik und/oder der Übertragungslogik hybride Datenübertragungsnetzwerke dem Meßsystem zugewiesene Betriebsdaten gleichermaßen versendet. Dementsprechend dient das Datenverarbeitungssystem üblicherweise auch dazu, das vom Meßsystem gelieferte Meßwertesignal entsprechend den Anforderungen nachgelagerter Datenübertragungsnetzwerke zu konditionieren, beispielsweise geeignet zu digitalisieren und gegebenenfalls in ein entsprechendes Telegramm umzusetzen, und/oder vor Ort auszuwerten. Dafür sind in solchen Datenverarbeitungssystemen mit den jeweiligen Verbindungsleitungen elektrisch gekoppelte Auswerteschaltungen vorgesehen, die die vom jeweiligen Meßsystem empfangenen Meßwerte vor- und/oder weiterverarbeiten sowie, falls erforderliche, geeignet konvertieren. Zur Datenübertragung dienen in solchen industriellen Datenverarbeitungssystemen zumindest abschnittsweise, insb. serielle, Feldbusse, wie z.B. FOUNDATION FIELDBUS, RACKBUS-RS 485, PROFIBUS etc., oder beispielsweise auch Netzwerke auf Basis des ETHERNET-Standards sowie die entsprechenden, zumeist übergreifend standardisierten Übertragungs-Protokolle. Alternativ oder in Ergänzung können bei modernen Meßsysteme der in Rede stehenden Art Meßwerte auch drahtlos per Funk an das jeweilige Datenverarbeitungssystem übermittelt werden. Neben den für die Verarbeitung und Konvertierung der von den jeweils angeschlossenen Meßsystemen gelieferten Meßwerte erforderlichen Auswerteschaltungen weisen solche übergeordnete Datenverarbeitungssysteme zumeist auch der Versorgung der angeschlossenen Meßsysteme mit elektrischer Energie dienende elektrische Versorgungsschaltungen auf, die eine entsprechende, ggf. direkt vom angeschlossenen Feldbus gespeiste, Versorgungsspannung für die jeweilige Meß- und Betriebselektronik bereitstellen und die daran angeschlossenen elektrische Leitungen sowie die jeweiligen Meß- und Betriebselektroniken durchfließende elektrische Ströme treiben. Eine Versorgungsschaltung kann dabei beispielsweise genau einem Meßsystem bzw. einer entsprechenden Meß- und Betriebselektronik jeweils zugeordnet und zusammen mit der dem jeweiligen Meßsystem zugeordneten Auswerteschaltung - beispielsweise zu einem entsprechenden Feldbusadapter vereint - in einem gemeinsamen, z.B. als Hutschienen-Modul ausgebildeten, Elektronik-Gehäuse untergebracht sein. Es ist aber durchaus auch üblich, Versorgungsschaltungen und Auswerteschaltungen jeweils in separaten, ggf. voneinander räumlich entfernten Elektronik-Gehäusen unterzubringen und über externe Leitungen miteinander entsprechend zu verdrahten.

Die Entwicklung auf dem Gebiet der Meßsysteme mit Meßaufnehmer vom Vibrationstyp hat inzwischen einen Stand erreicht, daß moderne Meßsysteme der beschriebenen Art für ein sehr breites Anwendungsspektrum der Durchflußmeßtechnik höchsten Anforderungen hinsichtlich Präzision und Reproduzierbarkeit der Meßergebnisse genügen können. So werden solche Meßaufnehmer bzw. die damit gebildeten Meßsysteme in der Praxis für Massendurchflußraten von nur einigen wenigen g/h (Gramm pro Stunde) bis zu einigen t/min (Tonnen pro Minute), bei Drücken von bis zu 10 MPa (Megapascal) für Flüssigkeiten oder sogar über 30 MPa für Gase eingesetzt. Die dabei erreichte Meßgenauigkeit liegt üblicherweise bei etwa 99,9% vom tatsächlichen Wert oder darüber bzw. einem Meßfehler von etwa 0,1%, wobei eine untere Grenze des garantierten Meßbereichs durchaus bei etwa 1% des Meßbereichsendwerts liegen kann. Aufgrund der hohen Bandbreite ihrer Einsatzmöglichkeiten werden industrietaugliche Meßsystem mit Meßaufnehmer vom Vibrationstyp mit nominellen Nennweiten (entspricht dem Kaliber der an den Meßaufnehmer anzuschließenden Rohrleitung bzw. dem Kaliber des Meßaufnehmers gemessen am Anschlußflansch) angeboten, die in einem Nennweitenbereich zwischen 0.5 mm und 400 mm (Millimeter) liegen und bei maximaler nomineller Massendurchflußrate, beispielsweise auch von mehr als 3000 t/h, jeweils für Druckverluste von weniger als 0.1 MPa spezifiziert sind. Ein Kaliber jedes der verwendeten Meßrohre kann bei großen Nennweiten ohne weiteres mehr als 80 mm betragen.

Trotzdem inzwischen Meßaufnehmer für den Einsatz in Rohrleitungen mit sehr hohen Massendurchflußraten und damit einhergehend sehr großem Kaliber von weit über 100 mm angeboten werden, besteht nach wie vor ein erhebliches Interesse daran, Meßaufnehmer von hoher Präzision und niedrigem Druckverlust auch für noch größer Rohrleitungskaliber, etwa 450 mm oder mehr, bzw. Massendurchflußraten, von 3000 t/h oder mehr, einzusetzen.. Nicht zuletzt die in der eingangs erwähnten US-A 2011/0265580 gezeigten Meßaufnehmer mit einem vier gebogene Meßrohre aufweisenden Vibrationselement sind zweifellos geeignet, nämliche Anforderungen erfüllen zu können, mithin für große nominellen Nennweiten von über 450 mm ausgelegt werden zu können. Dies nicht zuletzt auch in solchen Anwendungen, in denen auch die Volumendurchflußrate bzw. der Volumendurchfluß von besonderem Interesses sind, wie etwa für Anwendungen der petrochemischen Industrie oder im Bereich des Transports und Umschlags von Erdöl, Erdgas, Treibstoffen etc.

Allerdings können in Rohrleitungen aufweisenden industriellen Anlagen gelegentlich relativ knapp bemessene seitliche Abstände zwischen der Medium führenden Rohrleitung und dazu benachbarten Anlagenkomponenten den Einsatz von solchen, bauartbedingt vergleichsweise große seitliche Abmaße aufweisenden Meßaufnehmern bzw. Meßsystemen erheblich erschweren bzw. gelegentlich vollkommen ausschließen. Demgegenüber können solche Meßaufnehmer mit vier geraden Meßrohren, wie sie beispielsweise in der eingangs erwähnten WO-A 2012/028425, US-A 2011/0146416, US-A 2012/0073384, US-A 2012/0079891, US-A 2012/0227512 beschrieben sind, im Vergleich zu jenen mit gebogene Meßrohren bei gleicher nomineller Nennweite deutlich kompakter dimensioniert werden, wodurch sich deren Verwendung für Anwendungen mit limitiertem Platzangebot zunächst durchaus empfehlen. Meßaufnehmer vom Vibrationstyp, bei denen das Vibrationselement, wie u.a. auch in der US-A 56 661 232 gezeigt, gerade Meßrohre aufweist, zeigen, wie u.a. auch in der US-A 2012/0073384 bzw. US-A 48 23 614 erwähnt, allerdings im Vergleich zu solchen, bei denen das Vibrationselement mittels zwei oder mehr gebogenen Meßrohren gebildet ist, eine erhöhte Querempfindlichkeit auf mechanische Beanspruchungen, sei es durch via Rohleitung eingetragene - hauptsächlich axiale, nämlich in Richtung der gedachten Schwingung- bzw. einer dazu parallelen Meßrohrlängsachse wirkende - Einspannkräfte bzw. daraus resultierenden mechanische Spannungen im Vibrationselement oder durch mechanische Spannungen im Vibrationselement infolge thermisch bedingter elastischer Deformation der Meßrohre. Dies, wie bereits in der erwähnten US-A 2012/0073384 diskutiert, durchaus auch für den Fall, daß das Vibrationselement mittels vier geraden Meßrohren gebildet ist, von denen jedes ein Kaliber von mehr als 60 mm aufweist.

Wenngleich nämliche Einspannkräfte auf die Meßgenauigkeit, mit der Massendurchfluß bzw. die Massendurchflußrate ermittelt werden, nur einen geringen bzw. mit geringem Aufwand, etwa durch Verwendung von Temperatur- und/oder Dehnungssensoren, kompensierbaren Einfluß hat, so ist der Einfluß von Einspannkräften bzw. den daraus resultierenden mechanischen Spannungen im Vibrationselement auf die Meßgenauigkeit bei der Dichtemessung als durchaus erheblich anzusehen. Damit einhergehend kann dementsprechend auch die Volumendurchflußrate bzw. der daraus abgeleitete Volumendurchfluß eine entsprechend schwankende Meßgenauigkeit aufweisen. Erschwerend kommt hinzu, daß in Meßsystemen der in Rede stehenden Art nämliche Einspannkräfte potentiell umso größer sind, je höher die damit nominell zu messende Massendurchflußrate bzw. je höher die nominelle Nennweiten gewählt sind, mithin solche Anwendungen, in denen eher ein Interesse an der präzisen Ermittlung von hohen Volumendurchflüssen bzw. hohen Volumendurchflußraten, denn an der präzisen Ermittlung von Massendurchflüssen bzw. Massendurchflußraten besteht, zu gelegentlich nicht mehr tolerierbaren Meßungenauigkeiten bei Meßsystemen der in Rede stehenden Art führen können .

Ausgehend vom oben genannten Stand der Technik besteht daher eine Aufgabe der Erfindung darin, ein Meßsystem zum Ermitteln eines Volumendurchflusses und/oder einer Volumendurchflußrate eines in einer Rohrleitung Mediums basierend auch auf Vibrationen eines mittels wenigstens eines Meßrohrs gebildeten Vibrationselements anzugeben, daß möglichst keine oder nur eine geringe Querempfindlichkeit auf allfällige Änderungen von Spannungszuständen im Vibrationselement, etwa infolge von Temperaturänderungen bzw. -gradienten innerhalb des Vibrationselements und/oder infolge von außen auf das Vibrationselement wirkenden Kräften, wie z.B. via angeschlossener Rohrleitung eingetragene Einspannkräfte, aufweist bzw., daß eine genaue Messung von Volumendurchflüssen bzw. Volumendurchflußraten auch bei in großen Rohrleitungen von mehr als 100 mm Nennweite und/oder bei Massendurchflußraten von mehr als 100 t/h, insb. mehr als 1000 t/h ermöglicht.

Zur Lösung der Aufgabe besteht die Erfindung in einem Meßsystem zum Ermitteln eines Volumendurchflusses, nämlich eines während eines Meßintervalls insgesamt geflossenen Volumens, und/oder einer Volumendurchflußrate eines in einer Rohrleitung strömenden Mediums - beispielsweise einer Flüssigkeit oder eines Gases gemäß dem unabhängigen Anspruch 1.

Ein Grundgedanke der Erfindung besteht darin, eine Volumendurchflußrate bzw. einen Volumendurchfluß - nicht zuletzt auch im Gegensatz zu herkömmlichen Meßsystemen mit nur einem einzigen Meßaufnehmer vom Vibrationstyp - mittels zweier zu einem Meßaufnehmerverbund zusammengefügten Meßaufnehmern vom Vibrationstyp zu ermitteln, von welchen zwei Meßaufnehmern einer vornehmlich für das Generieren zweier Schwingungssignale mit einer mit der Massendurchflußrate des in nämlichem Meßaufnehmern strömenden Mediums korrelierten Phasendifferenz eingerichtet ist, während der andere der zwei Meßaufnehmer vornehmlich für das Generieren wenigstens eines Schwingungssignals mit einer mit der Dichte des in nämlichem Meßaufnehmern geführten Mediums korrelierten Signalfrequenz eingerichtet ist. Aufgrund der vorbeschriebenen Aufteilung der für die Ermittlung von Volumendurchflußrate bzw. Volumendurchfluß erforderlichen Funktionen, nämlich die Generierung der Phasendifferenz zum einen und die Generierung der Signalfrequenz zum anderen, auf jeweils einen eigens dafür vorgesehenen, eigenständigen Meßaufnehmer, ist es beim erfindungsgemäßen Meßsystem zudem möglich, allfällige mechanische Beanspruchungen besonders von dem für die Generierung der Signalfrequenz vorgesehenen Meßaufnehmer fernzuhalten und/oder nämlichen Meßaufnehmer so zu konstruieren, daß er für derartige Beanspruchungen besonders unempfindlich ist, etwa durch Verwendung lediglich gebogener Meßrohre zum Führen des für die Messung benötigten Teilvolumens vom Medium. Infolgedessen weist das erfindungsgemäße Meßsystem eine hohe Meßgenauigkeit auf, mit der Volumendurchflußrate bzw. Volumendurchfluß ermittelt werden können.

Ein weiterer Vorteil des erfindungsgemäßen Meßsystems ist u.a. aber auch darin zu sehen, daß der vornehmlich der Bereitstellung der mit der zu messenden Massendurchflußrate korrelierten Phasendifferenz dienende Meßaufnehmer hinsichtlich seiner Abmessungen wesentlich größer als der andere, vornehmlich der Bereitstellung der mit der zu messenden Dichte korrelierten Signalfrequenz dienende Meßaufnehmer dimensioniert sein kann, wodurch es beispielsweise auch möglich ist, letzteren an dem vom anderen Meßaufnehmer ohnehin bereitgestellten Gehäuse zu haltern und auch innerhalb nämlichen Gehäuses anzuordnen und so das Meßsystem - trotz der vorbeschriebenen Aufteilung der beiden Einzelmessfunktionen auf zwei eigenständige Meßaufnehmer - beispielsweise auch so ausgestalten zu können, daß es äußerlich als ein einziges Durchfluß-Meßgerät erscheint, ggf. auch mit den für solche Durchfluß-Meßgerät üblichen Einbaumaßen. Aufgrund der zuvor beschriebenen Abmessungen ist es hierbei zu dem auch ohne weiteres möglich, beide Meßaufnehmer in ausreichendem Maße voneinander schwingungstechnisch zu entkoppeln, so daß sie also trotz ihrer räumlichen Nähe hinsichtlich ihres Schwingungsverhaltens voneinander weitgehend unabhängig sind bzw. jedes der beiden Vibrationselement unabhängig vom jeweils anderen Vibrationselement vibrieren kann.

Das erfindungsgemäße Meßsystem kann zudem beispielsweise auch mittels zweier herkömmlicher und/oder auch einzeln verwendbarer Meßaufnehmer vom Vibrationstyp hergestellt werden, die lediglich dahingehend geringfügig zu modifizieren sind, daß jeder der beiden Meßaufnehmer im fertiggestellten Meßsytem sowohl von zu messendem Medium durchströmt als auch an die schlußendlich die gewünschten Meßwerte liefernde Meß- und Betriebselektronik angeschlossen werden kann. Darüberhinaus kann das in der vorbeschriebene Weise, nämlich mittels eines zwei Meßaufnehmer vom Vibrationstyp umfassenden Meßaufnehmerverbund gebildete Meßsystem beispielsweise auch dadurch auf sehr einfache Weise bereitgestellt werden, indem zwei ansonsten eigenständige Meßgeräte, nämlich ein Coriolis-Massendurchfluß-Meßgeräts sowie ein vibronisches Dichte-Meßgerät, strömungs- und signaltechnisch entsprechend zusammengeschlossen werden. Die Erfindung sowie weitere vorteilhafte Ausgestaltungen davon werden nachfolgend anhand von Ausführungsbeispielen näher erläutert, die in den Figuren der Zeichnung dargestellt sind. Gleiche Teile sind in allen Figuren mit denselben Bezugszeichen versehen; wenn es die Übersichtlichkeit erfordert oder es anderweitig sinnvoll erscheint, wird auf bereits erwähnte Bezugszeichen in nachfolgenden Figuren verzichtet. Weitere vorteilhafte Ausgestaltungen oder Weiterbildungen, insb. auch Kombinationen zunächst nur einzeln erläuterter Teilaspekte der Erfindung, ergeben sich ferner aus den Figuren der Zeichnung wie auch den Unteransprüchen an sich.

Im einzelnen zeigen:

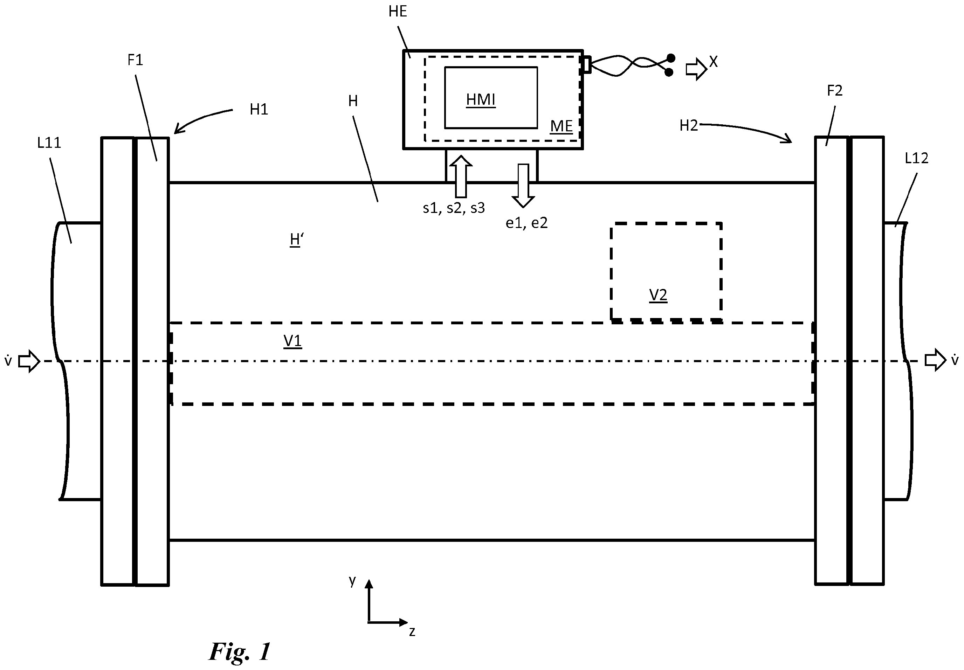

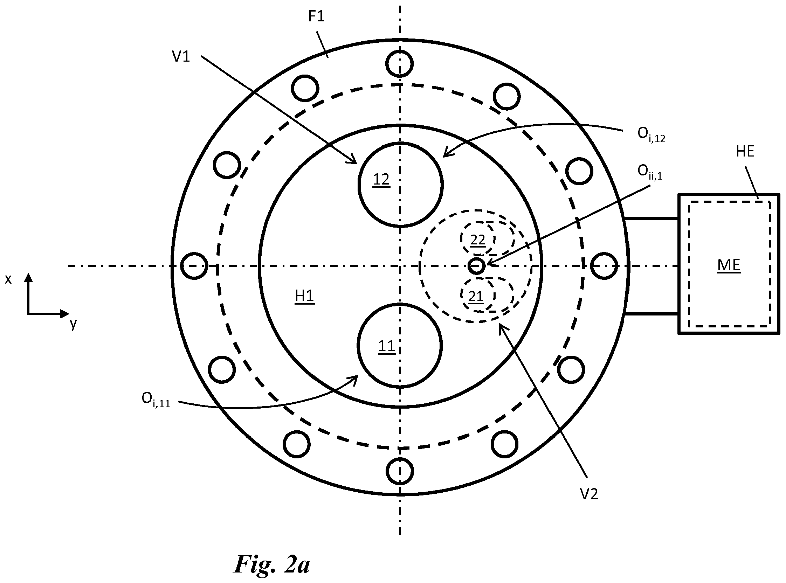

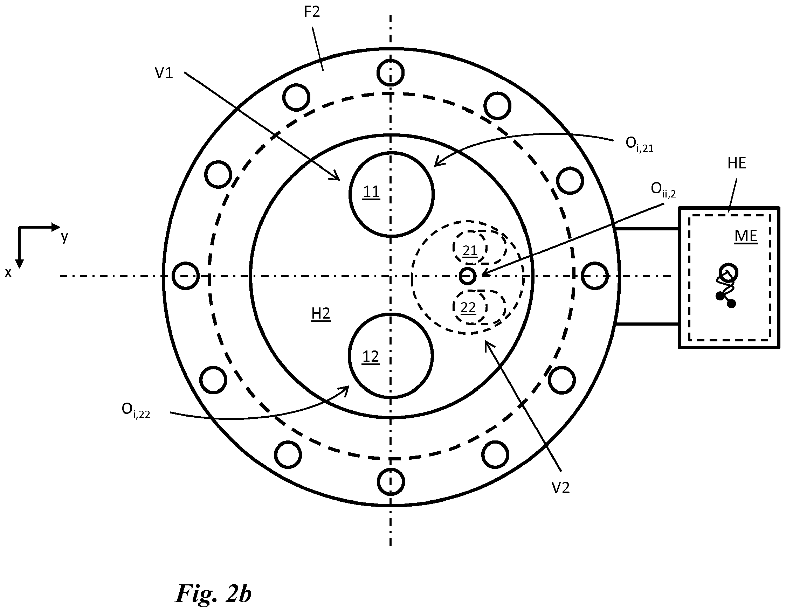

Fig. 1, 2a, 2b　ein - hier als ein Meßgerät in Kompaktbauweise ausgebildetes - Meßsystem der industriellen Meß- und Automatisierungstechnik für die Messung einer Volumendurchflußrate und/oder eines Volumendurchflusses eines in einer Rohrleitung strömenden Mediums in verschiedenen Seitenansichten;

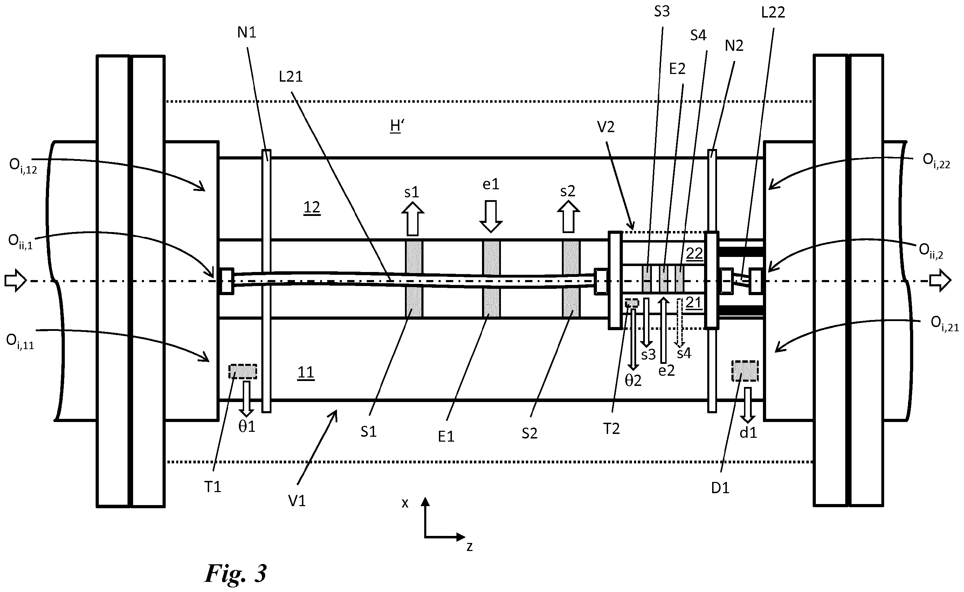

Fig. 3　schematisch nach Art einer eine Prinzipskizze ein Meßsystem gemäß Fig. 1 mit zwei innerhalb ein und desselben Gehäuses untergebrachten, im Betrieb des Meßsystem jeweils zumindest zeitweise von Medium durchströmten Vibrationselementen;

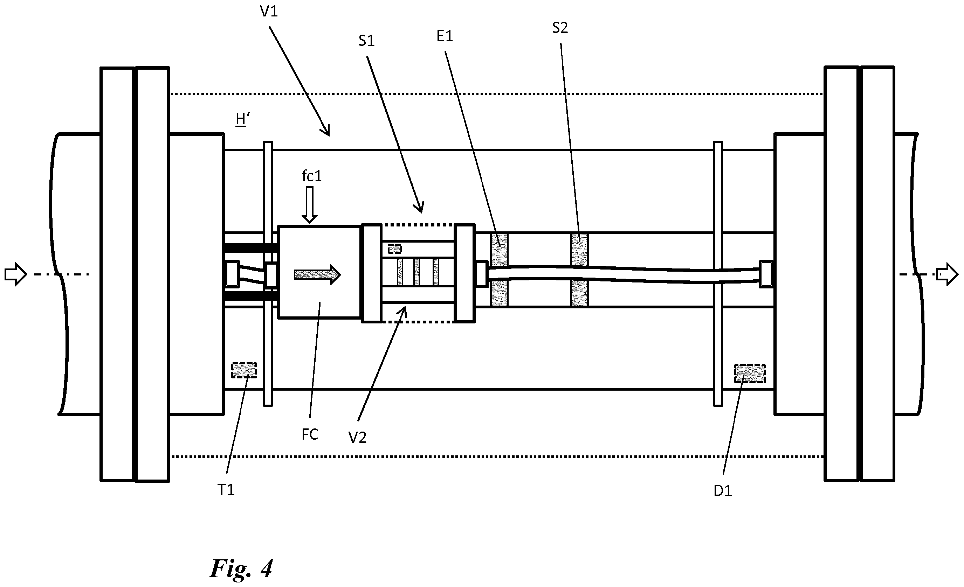

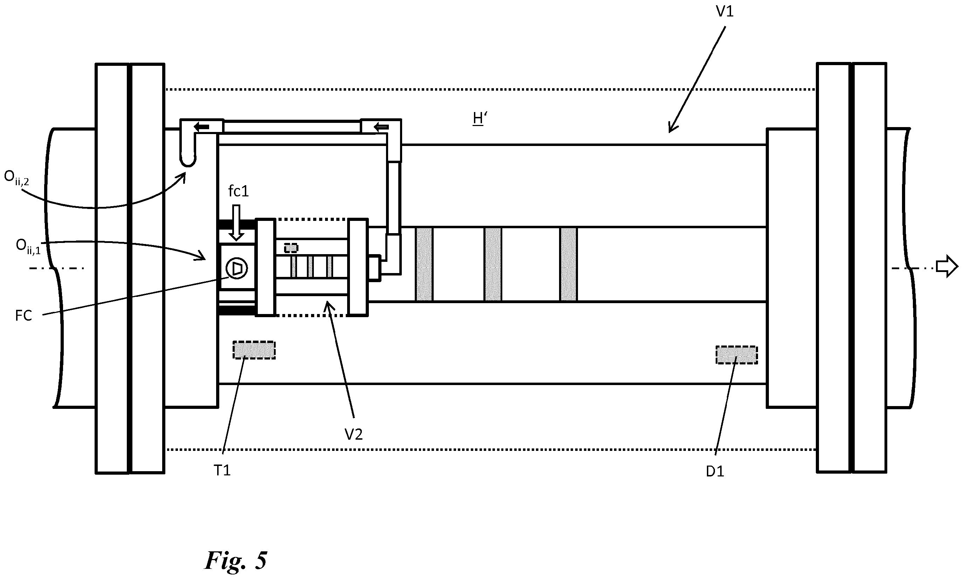

Fig. 4, 5　schematisch nach Art einer eine Prinzipskizze weitere Ausgestaltungsvarianten für ein Meßsystem gemäß Fig. 1 mit wiederum zwei innerhalb ein und desselben Gehäuses untergebrachten, im Betrieb des Meßsystem jeweils zumindest zeitweise von Medium durchströmten Vibrationselementen;

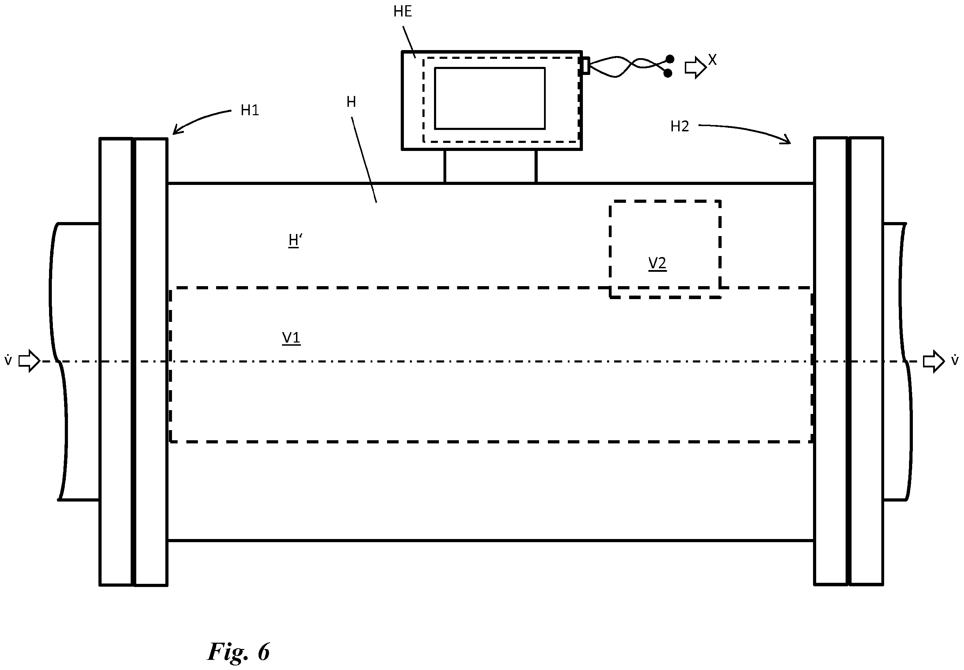

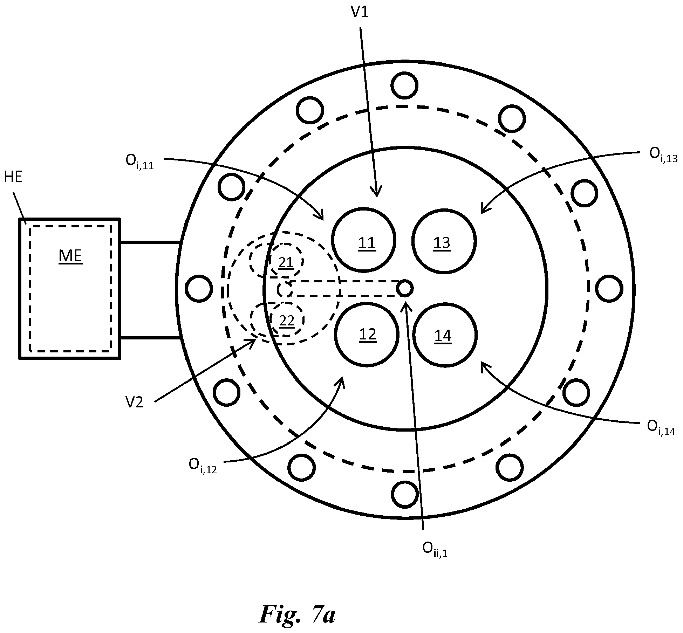

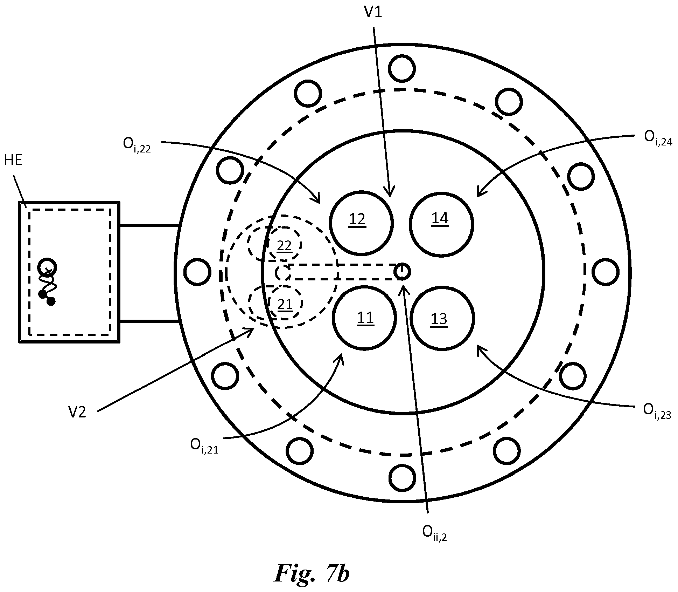

Fig. 6, 7a, 7b　schematisch nach Art einer eine Prinzipskizze eine weitere Ausgestaltungsvariante für ein Meßsystem gemäß Fig. 1 mit wiederum zwei innerhalb ein und desselben Gehäuses untergebrachten, im Betrieb des Meßsystem jeweils zumindest zeitweise von Medium durchströmten Vibrationselementen, von denen eines mittels vier strömungstechnisch parallelen Meßrohren gebildet ist;

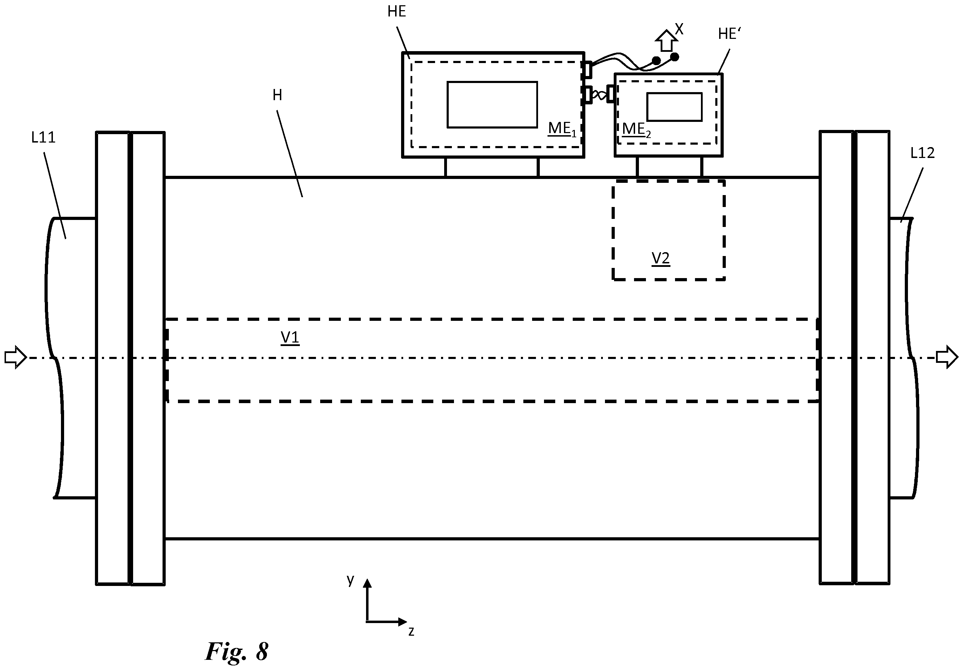

Fig. 8　schematisch nach Art einer eine Prinzipskizze eine weitere Ausgestaltungsvariante für ein Meßsystem gemäß Fig. 1 mit wiederum zwei innerhalb ein und desselben Gehäuses untergebrachten, im Betrieb des Meßsystem jeweils zumindest zeitweise von Medium durchströmten Vibrationselementen und mit zwei miteinander kommunizierenden, separaten Elektronikmodulen; und

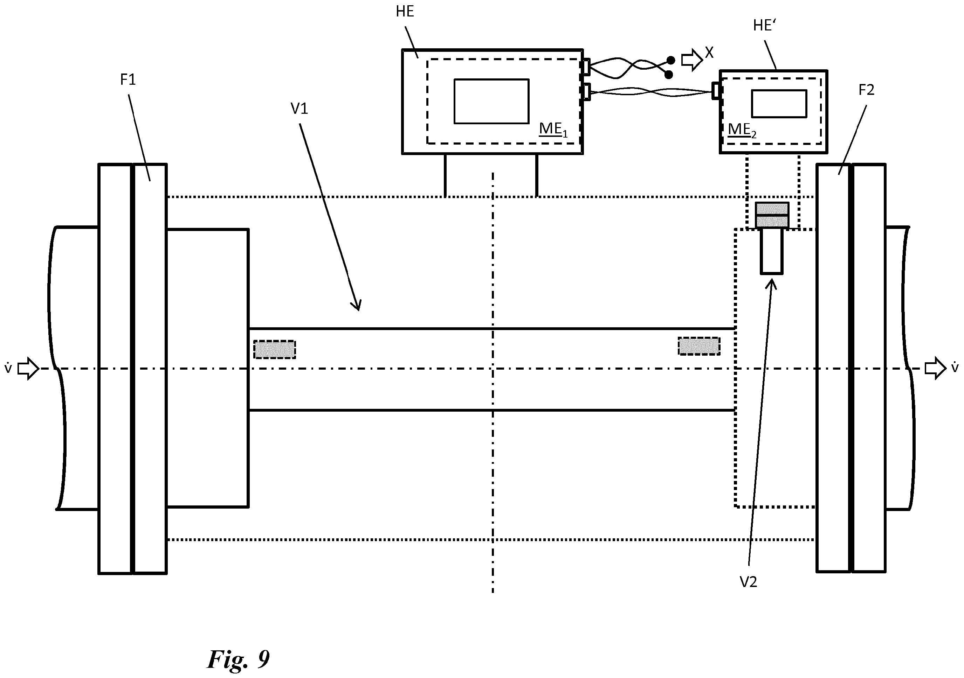

Fig. 9      schematisch nach Art einer eine Prinzipskizze eine weitere, nicht erfindungsgemäße, Ausgestaltungsvariante für ein Meßsystem gemäß Fig. 1 mit einem innerhalb eines Gehäuses untergebrachten, im Betrieb des Meßsystem von Medium durchströmten Vibrationselement und mit einem außen am Gehäuse angebrachten, im Betrieb des Meßsystem von Medium anströmten weiteren Vibrationselement.

In den Fig. 1-9 ist - in unterschiedlichen Ansichten bzw. verschiedenen Ausgestaltungsvarianten - ein Meßsystem zum Ermitteln eines Volumendurchflusses v, nämlich eines während eines vorgebbaren oder vorab bestimmten Meßintervalls insgesamt geflossenen Volumens, und/oder einer Volumendurchflußrate v eines in einer Rohrleitung strömenden Mediums, insb. einer Flüssigkeit oder eines Gases, schematisch dargestellt. Das Meßsystem umfaßt eine, insb. mittels wenigstens eines Mikroprozessors und/oder mittels eines digitalen Signalprozessors (DSP) gebildete, Meß- und Betriebselektronik ME zum Erzeugen von die Volumendurchflußrate v bzw. den Volumendurchfluß v repräsentierenden Meßwerten bzw. zum Ausgeben eines solchen Meßwerts als einen aktuell gültigen Meßwert X des Meßsystems an einem entsprechenden Meßausgang der Meß- und Betriebselektronik ME. Die Meß- und Betriebselektronik ME kann wie in den Fig. 1, 2a, 2b und 3 angedeutet, in einem einzigen Elektronikgehäuse HE des Meßsystems untergebracht sein. Falls erforderlich kann die Meß- und Betriebselektronik ME aber auch, wie beispielsweise auch in den Fig. 8 bzw. 9 schematisch dargestellt, mittels zweier miteinander kommunizierenden Elektronikmodule $ME_1$, $ME_2$ gebildet sein, von denen jedes in einem von zwei oder mehr separaten Elektronikgehäusen HE, HE' des Meßsystems unter-bracht ist. Die mittels der Meß- und Betriebselektronik ME generierten Meßwerte X können beispielsweise vor Ort angezeigt werden. Zum Visualisieren von Meßsystem intern erzeugten Meßwerten und/oder gegebenenfalls Meßsystem intern generierten Systemstatusmeldungen, wie etwa einer Fehlermeldung oder einem Alarm, vor Ort kann das Meßsystem, wie auch Fig. 1 angedeutet, beispielsweise ein mit der Meß- und Betriebselektronik kommunizierendes, ggf. auch portables, Anzeige- und Bedienelement HMI aufweisen, wie etwa ein im Elektronikgehäuse HE hinter einem darin entsprechend vorgesehenen Fenster plaziertes LCD-, OLED- oder TFT-Display sowie eine entsprechende Eingabetastatur und/oder ein Touchscreen. In vorteilhafter Weise kann die, beispielsweise auch (re-)programmier- bzw. fernparametrierbare, Meß- und Betriebselektronik zudem so ausgelegt sein, daß sie im Betrieb des Meßsystems mit einem diesem übergeordneten elektronischen Datenverarbeitungssystem, beispielsweise einer speicherprogrammierbaren Steuerung (SPS), einem Personalcomputer und/oder einer Workstation, via Datenübertragungssystem, beispielsweise einem Feldbussystem und/oder drahtlos per Funk, Meß- und/oder andere Betriebsdaten austauschen kann, wie etwa aktuelle Meßwerte, Systemdiagnosewerte oder aber auch der Steuerung des Meßgeräts dienende Einstellwerte. Des weiteren kann die Meß- und Betriebselektronik ME so ausgelegt sein, daß sie von einer externen Energieversorgung, beispielsweise auch über das vorgenannte Feldbussystem, gespeist werden kann. Für den Fall, daß das Meßsystem für eine Ankopplung an ein Feldbus- oder ein anderes Kommunikationssystem vorgesehen ist, kann die, beispielsweise auch vor Ort und/oder via Kommunikationssystem (re-)programmierbare, Meß- und Betriebselektronik ME zu dem eine entsprechende, insb. einem der einschlägigen Industriestandards konforme, Kommunikations-Schnittstelle für eine Datenkommunikation aufweisen, z.B. zum Senden von Meß- und/oder Betriebsdaten, mithin den Volumendurchfluß v bzw. die Volumendurchflußrate v repräsentierenden Meßwerte, an die bereits erwähnte speicherprogrammierbare Steuerung oder ein übergeordnetes Prozeßleitsystem und/oder zum Empfangen von Einstelldaten für das Meßsystem. Darüberhinaus kann die Meß- und Betriebselektronik ME beispielsweise eine solche interne Energieversorgungsschaltung aufweisen, die im Betrieb von einer im vorgenannten Datenverarbeitungssystem vorgesehenen externen Energieversorgung über das vorgenannte Feldbussystem gespeist wird. Hierbei kann das Meßsystem beispielsweise als sogenanntes Vierleiter-Meßgerät ausgebildet sein, bei dem die interne Energieversorgungsschaltung der Meß- und Betriebselektronik ME mittels einem ersten Paars Leitungen mit einer externen Energieversorgung und die interne Kommunikationsschaltung der Meß- und Betriebselektronik ME mittels eines zweiten Paars Leitungen mit einer externen Datenverarbeitungsschaltung oder einem externen Datenübertragungssystem verbunden ist.

Außer der Meß- und Betriebselektronik ME umfaßt das erfindungsgemäße Meßsystem desweiteren ein ein Lumen aufweisendes erstes Vibrationselement V1, das dafür eingerichtet ist, in nämlichem Lumen einen mit einer ersten Massendurchflußrate $m_1$ strömendem Anteil des Mediums zu führen und währenddessen vibrieren gelassen zu werden; insbesondere ist das Vibrationselement V1 dafür eingerichtet, in den Verlauf der Rohrleitung eingesetzt und so daran, nämliche an ein erstes Leitungssegment L11 der Rohrleitung und ein zweites Leitungssegment L12 der Rohrleitung, angeschlossen zu werden, daß das Lumen des Vibrationselements V1 mit einem jeweiligen Lumen jedes der beiden Leitungssegmente L11, L12 kommuniziert und wenigstes ein Fluidströmung vom Leitungssegment L11, weiters durch das Vibrationselement V1 hindurch bis hin zum Leitungssegment L12 ermöglichender Strömungspfad gebildet ist. Desweiteren umfaßt das Meßsystem wenigstens einen, beispielsweise mittels eines - hier aus Gründen besserer Übersichtlichkeit nicht gezeigten - Paares von Anschlußdrähten, an die Meß- und Betriebselektronik elektrisch angeschlossenen und davon angesteuerten ersten Schwingungserreger E1 zum Anregen von Vibrationen des Vibrationselements V1, derart, daß das Vibrationselement V1 zumindest anteilig Resonanzschwingungen, nämlich mechanische Schwingungen mit einer ersten Resonanzfrequenz $f_{r1}$ ausführt. Im besonderen sind hierbei solche - gelegentlich auch als Nutzmode- oder Antriebs-Schwingungen bezeichnete - Resonanzschwingungen angeregt, deren Resonanzfrequenz zum einen in einem hohen Maße auch von einer Dichte $\rho$ des Mediums abhängig sind, und die zum anderen eine möglichst hohe Empfindlichkeit gegenüber Änderungen der Dichte aufweist, mithin eine hohe Auflösung auch geringfügiger Dichteschwankungen ermöglichen. Die Meß- und Betriebselektronik ist hierbei ferner dafür eingerichtet, zumindest zeitweise ein elektrisches- beispielsweise auf eine vorgegebenen Spannungshöhe und/oder auf eine vorgegebene Stromstärke geregeltes - erstes Treibersignal e1 für den - beispielsweise elektrodynamischen, nämlich mittels Tauchankerspule gebildeten - Schwingungserreger E1 zu generieren, das dazu dient, den Schwingungserreger E1 kontrolliert zumindest mit der für das Anregen bzw. Aufrechterhalten der Nutzmode-Schwingungen benötigten elektrischen Leistung zu speisen, und das eine der (momentanen) Resonanzfrequenz $f_{r1}$ des Vibrationselements V1 entsprechende Signalfrequenz aufweist.

Zum Erfassen von Vibrationen des Vibrationselements V1, nicht zuletzt von mittels des Schwingungserregers E1 angeregten Resonanzschwingungen, umfaßt das Meßsystem weiters einen, beispielsweise mittels eines - hier aus Gründen besserer Übersichtlichkeit ebenfalls nicht gezeigten - weiteren Paares von Anschlußdrähten, an die Meß- und Betriebselektronik elektrisch angeschlossenen, insb. elektrodynamischen, ersten Schwingungssensor S1 sowie einen vom ersten Schwingungssensor S1 beabstandeten, beispielsweise gleichermaßen wie dieser an die Meß- und Betriebselektronik elektrisch angeschlossenen und/oder zum Schwingungssensor S1 baugleichen, zweiten Schwingungssensor S2. Der Schwingungssensor S1 ist dafür eingerichtet, ein von Vibrationen des Vibrationselements 10 abhängiges erstes Schwingungssignal s1 zu generieren, das eine der Schwingfrequenz der Nutzmode-Schwingungen, mithin der momentan angeregten Resonanzfrequenz $f_{r1}$ des Vibrationselements V1 entsprechende Signalfrequenz aufweist, während der Schwingungssensor S2 dafür eingerichtet ist, ein von Vibrationen des Vibrationselements V1 abhängiges zweites Schwingungssignal s2 zu generieren, und zwar derart, daß das Schwingungssignal s2 eine zur Signalfrequenz des ersten Schwingungssignals s1 gleiche, mithin nämlicher Resonanzfrequenz $f_{r1}$ des Vibrationselements V1 entsprechende Signalfrequenz sowie relativ zum ersten Schwingungssignal eine von der ersten Massendurchflußrate $m_1$ abhängige Phasendifferenz $\Delta_{\varphi12}$ aufweist.

Der Schwingungserreger E1 wie auch die Schwingungssensoren s1, s2 sind, wie bei derartigen Vibrationselementen üblich, außen am Vibrationselement V1, nämlich auch im Betrieb nicht vom zu messenden Medium kontaktierten, Seite angeordnet. Nämlicher Schwingungserreger E1 dient im besonderen dazu, eine mittels des elektrischen Treibersignals e1 eingespeiste elektrische Erregerleistung $P_{exc1}$ in, z.B. pulsierende oder harmonische, nämlich im wesentlichen sinusförmige, Erregerkräfte $F_{exc1}$ zu konvertieren, die entsprechend auf das Vibrationselement einwirken und somit die gewünschten Resonanzschwingungen aktiv anregen. Beispielsweise kann das wenigstens eine Treibersignal e1 gleichzeitig auch eine Vielzahl von sinusförmigen Signalkomponenten mit voneinander verschiedener Signalfrequenz aufweisen, von denen eine - etwa eine zumindest zeitweise hinsichtlich einer Signalleistung dominierende - Signalkomponente die eine der Resonanzfrequenz $f_{r1}$ entsprechende Signalfrequenz aufweist. Die - durch Konvertierung von in den Schwingungserreger E1 eingespeister elektrischer Erregerleistung $P_{exc1}$ schlußendlich generierten - Erregerkräfte $F_{exc}$ können dabei in dem Fachmann an und für sich bekannter Weise, nämlich mittels einer in der Meß- und Betriebselektronik ME vorgesehenen, das Treibersignal e1 anhand von Signalfrequenz und Signalamplitude wenigstens eines der Sensorsignale s1, s2 ein- und über einen Ausgangskanal bereitstellenden Treiberschaltung entsprechend erzeugt werden. Zum Ermitteln der momentanen Resonanzfrequenz bzw. zum Einstellen der entsprechenden Signalfrequenz für das Treibersignal kann in der Treiberschaltung beispielsweise eine digitalen Phasen-Regelschleife (PLL - phase locked loop) vorgesehen sein, während eine einen Betrag nämlicher Erregerkräfte $F_{exc1}$ bestimmende Stromstärke des Treibersignals beispielsweise mittels eines entsprechenden Stromreglers der Treiberschaltung passend eingestellt werden kann. Die Meß- und Betriebselektronik kann hier z.B. auch dafür ausgestaltet sein, das Treibersignal e1 in der Weise zu regeln, daß die Resonanzschwingungen eine gleichbleibende, mithin auch von der Dichte $\rho$ bzw. auch der Viskosität $\eta$ des jeweils zu messenden Mediums weitgehend unabhängige Amplitude aufweisen. Der Aufbau und die Verwendung vorgenannter Phasenregel-Schleifen zum aktiven Anregen von Vibrationselementen der in Rede stehenden Art auf einer momentanen Resonanzfrequenz ist z.B. in der US-A 48 01 897 ausführlich beschrieben. Selbstverständlich können auch andere für das Einstellen der Erregerenergie $E_{exc1}$ bzw. der Erregerleistung $P_{exc1}$ geeignete, dem Fachmann an und für sich bekannte Treiberschaltungen verwendet werden, beispielsweise auch gemäß der dem eingangs erwähnten Stand der Technik, etwa den eingangs erwähnten US-A 47 77 833, US-A 48 01 897, US-A 48 79 911, US-A 50 09 109, US-A 50 24 104, US-A 50 50 439, US-A 58 04 741, bzw. US-A 63 11 136. Ferner sei hinsichtlich einer Verwendung solcher Treiberschaltungen auch auf die mit Meßumformern (Transmitter)der Serie "PROMASS 100", "PROMASS 40", "PROMASS 80", "PROMASS 83""PROMASS 84" bereitgestellte Meß- und Betriebselektroniken verwiesen, wie sie von der Anmelderin u.a. in Verbindung mit auch der Messung von Massendurchflußrate und Dichte dienenden Meßwandlern der Serien "PROMASS E", "PROMASS F", "PROMASS H", "PROMASS I", "PROMASS P", "PROMASS S" bzw. "PROMASS X", beispielsweise auch via Internet auf http://www.us.endress.com/#products/~flow-measurment-flowmeter-coriolis-masss, angeboten werden.

Das Meßsystem umfaßt ferner wenigstens ein Gehäuse H mit einem, insb. zur umgebenden Atmosphäre hin hermetisch dicht, ggf. auch druck- und/oder explosionsfest verschlossenen, Lumen H', innerhalb dessen das erste Vibrationselement V1 zusammen mit dem wenigstens einen Schwingungserreger E1 sowie den beiden Schwingungssensoren S1, S2 untergebracht ist. Das Gehäuse H ist im Vergleich zum Vibrationselement V1 wesentlich biege- und verwindungssteifer ausgebildet und weist zudem ein, beispielsweise mittels Flanschverbindung, an das erste Leitungssegment L11 der Rohrleitung anschließbares erstes Gehäuseende H1 sowie ein, beispielsweise mittels Flanschverbindung, an das zweite Leitungssegment L12 der Rohrleitung anschließbares zweites Gehäuseende H2 auf. Nach einer weiteren Ausgestaltung der Erfindung weisen daher, wie aus der Zusammenschau der Fig. 1, 2a, 2b und 3 ohne weiteres ersichtlich, das Gehäuseende H1 wenigstens eine erste Strömungsöffnung $O_{i,11}$ erster Art - nämlich eine erste mit dem Vibrationselement V1 kommunizierende Strömungsöffnung - und das Gehäuseende H2 wenigstens eine erste Strömungsöffnung $O_{i,21}$ erster Art - nämlich eine erste

mit dem Vibrationselement V1 kommunizierende Strömungsöffnung - auf. Darüberhinaus weist jedes der beiden Gehäuseenden jeweils einen entsprechenden Anschlußflansch auf. Ferner kann das Gehäuse H, wie auch in Fig. 1 schematisch dargestellt, einen halsartigen Haltestutzen aufweisen , an dem das wenigstens eine Elektronikgehäuse HE unter Bildung eines Meßgeräts in Kompaktbauweise montiert ist. Innerhalb des Haltestutzen kann desweiteren eine, beispielsweise mittels Glas- und/oder Kunststoffverguß hergestellte, hermetisch dichte und/oder druckfeste Durchführung für von der Meß- und Betriebselektronik aus in das Lumen H' des Gehäuses H führend elektrische Anschlußdrähte angeordnet sein.

Das Vibrationselement V1 des erfindungsgemäßen Meßsystems ist, wie aus der Zusammenschau der Fig. 1 bis 3 ohne weiteres ersichtlich, mittels eines - beispielsweise geraden, mithin kreiszylindrischen - Meßrohrs 11 von vorgebbarem Kaliber (DN11) gebildet, das im Betrieb des Meßsystems in den Verlauf der Rohrleitung eingesetzt und, nicht zuletzt auch zwecks der Generierung der erwähnten Resonanzschwingungen (Nutzmode-Schwingungen), über eine vorgegebenen freie Schwinglänge zumindest temporär vibrieren gelassen ist. Das Meßrohr 11 kann - wie bei derartigen in industriellen Meßsystemen verwendeten Vibrationselementen üblich - beispielsweise ein aus einem Edelstahl oder auch aus einer Titan-, einer Tantal- und/oder einer Zirconium-Legierung hergestelltes Metallrohr sein und ein Kaliber von mehr als 20 mm aufweisen ($DN11 \geq 20$ mm). Nämliches Meßrohr 11 mündet, wie aus der Zusammenschau der Fig. 2a, 2b und 3 ohne weiteres ersichtlich, nicht zuletzt auch zwecks der Bereitstellung des erwähnten wenigstens einen Strömungspfades, mit einem ersten Rohrende in die Strömungsöffnung $O_{i,11}$ erster Art des ersten Gehäuseendes sowie mit einem zweiten Rohrende in die Strömungsöffnung $O_{i,21}$ erster Art des ersten Gehäuseendes. Als aktiv angeregte Resonanzschwingungen können hierbei - wie bei Verwendung derartiger Vibrationselemente durchaus üblich - beispielsweise Schwingungen eines mit seiner momentanen Resonanzfrequenz angeregten natürlichen Eigenmodes des Vibrationselements V1 dienen, bei denen das wenigstens eine Meßrohr 11 zumindest anteilig Biegeschwingungen um eine deren beiden Rohrenden imaginär verbindende gedachte Schwingungsachse ausführt, beispielsweise derart, daß nämliche Biegeschwingungen über die gesamte freie Schwinglänge lediglich einen einzigen Schwingungsbauch aufweisen. Im Falle eines geraden Meßrohrs können nämlichen Biegeschwingungen zudem auch Torsionsschwingungen um die Schwingungsachse überlagert sein, beispielsweise auch solche von gleicher Schwingungsfrequenz wie die Biegeschwingungen und/oder solche eines weiteren Eigenmodes des Vibrationselements, bei dem auch die Torsionsschwingungen über die gesamte freie Schwinglänge lediglich einen einzigen Schwingungsbauch aufweisen.

Erfindungsgemäß ist das Vibrationselement V1, wie auch in den Fig. 2a, 2b, 3 schematisch dargestellt, nicht mittels nur eines einzigen, sondern mittels wenigstens zweier baugleicher, zueinander zumindest abschnittsweise parallel verlaufend angeordneter Meßrohre, mithin mittels eines ersten Meßrohrs 11 und wenigstens eines weiteren - zweiten - Meßrohrs 12 gebildet. Dies z.B. in der Weise, daß das Vibrationselement V1, wie auch aus der Zusammenschau der Fig. 2a, 2b bis 3 ersichtlich, mittels wenigstens zweier gerader, zueinander paralleler Meßrohre gebildet ist, die unter Bildung möglichst gleichlanger freier Schwinglängen lediglich punktuell mechanisch miteinander gekoppelt sind, beispielsweise mittels an den Endbereichen der Meßrohre, mithin jeweils in der Nähe eines der Gehäuseenden H1, H2 fixierten Knotenplatten N1, N2. Das Vibrationselement V1 kann hierbei zudem so ausgebildete sein, daß es beispielsweise einem der in den eingangs erwähnten US-A 2006/0162468, US-A 2007/0151368, US-A 2008/0047361, US-A 2011/0154914, US-A 2011/0016991, oder US-A 2012/0048034 gezeigten Vibrationselementen entspricht.

Nach einer weiteren Ausgestaltung der Erfindung sind nämliche Meßrohre 11, 12 strömungstechnisch parallel geschaltet. Dafürweist jedes der beiden Gehäuseenden H1, H2, wie in der Fig. 2a bzw. 2b schematisch dargestellt, jeweils wenigstens eine weitere - zweite - Strömungsöffnung $O_{i,12}$ bzw. $O_{i,22}$ erster Art auf, von denen - zwecks Bildung eines weiteren, zum zuvor erwähnten Strömungspfades parallelen Strömungspfades - die Strömungsöffnung $O_{i,12}$ ein erstes Rohrende des Meßrohrs 12 und die Strömungsöffnung $O_{i,22}$ des Gehäuseendes H2 ein zweites Rohrende des Meßrohrs 12 aufnehmen.

Wie aus einer Zusammenschau der Fig. 6, 7a, 7b - insb. auch im Vergleich mit Fig. 1, 2a, 2b - ersichtlich, kann das erste Vibrationselement V1 beispielsweise auch mittels vier baugleichen geraden und zueinander parallel verlaufenden Meßrohren 11, 12, 13 und 14 gebildet sein, beispielsweise also auch einem der in den eingangs erwähnten US-A 2010/0050783, US-A 2010/0242623 bzw. US-A 2012/0079891 gezeigten Vibrationselemente entsprechen. Dies im besonderen in der Weise, daß zum Bilden von vier parallelen Strömungspfaden das Gehäuseende H1 vier Strömungsöffnungen $O_{i,11}$, $O_{i,12}$, $O_{i,13}$, $O_{i,14}$ erster Art aufweist, von denen jede jeweils genau ein erstes Rohrende eines der vier Meßrohre 11, 12, 13 bzw. 14 aufnimmt, und das Gehäuseenden H2 ebenfalls vier Strömungsöffnungen $O_{i,21}$, $O_{i,22}$, $O_{i,23}$, $O_{i,24}$ erster Art aufweist, von denen jede jeweils genau ein zweites Rohrende des in die jeweils korrespondierende Strömungsöffnung erster Art des Gehäuseendes H1 mündenden Meßrohrs 11, 12, 13 bzw. 14 aufnimmt. Diese Ausgestaltungsvariante des Vibrationselements V1 ist, wie auch in den US-A 2010/0050783, US-A 2010/0242623 oder US-A 2012/0079891 aufgezeigt, besonders auch für solche Meßsysteme geeignet, die eine nominellen Nennweite von mehr als 100 mm, beispielsweise also 250 mm, 350 mm, 450 oder darüber, aufweisen und/oder für solche Anwendungen vorgesehen sind, bei denen das Medium auch mit einer Massendurchflußrate von mehr als 100 t/h, insb. auch mehr als 1000 t/h, strömen kann.

Wie bereits erwähnt, dient das erfindungsgemäße Meßsystem im besonderen dazu einen Volumendurchfluß und/oder eine Volumendurchflußrate des im Betrieb in der Rohrleitung strömenden Mediums zu ermitteln. Wenngleich die Volumendurchflußrate, mithin der Volumendurchfluß als Integralwert der im erwähnten Meßintervall wiederkehrend ermittelten Volumendurchflußrate, grundsätzlich - und wie bei konventionellen Meßsystemen mit Vibrationselementen der vorgenannten Art durchaus üblich - auch bereits allein basierend auf den von den beiden Schwingungssensoren S1, S2 gelieferten Schwingungssignalen s1 bzw. s2, nämlich basierend auf der zwischen den Schwingungssignalen S1, S2 existierenden Phasendifferenz $\Delta_{\varphi12}$ und basierend auf der der Resonanzfrequenz $f_{r1}$ des Vibrationselements V1 entsprechenden Signalfrequenz wenigstens eines der Schwingungssignale s1 bzw. s2, ermittelt werden kann, weist das erfindungsgemäße Meßsystem desweiteren ein, insb. auch am Gehäuse H gehaltenes und/oder in einem biege- und verswindungssteifen Rahmen schwingfähig eingespanntes, zweites Vibrationselement V2, wenigstens einen mit dem Vibrationselement V2 in Wirkverbindung stehenden, an die Meß- und Betriebselektronik ME elektrisch angeschlossenen, insb. elektrodynamischen, zweiten Schwingungserreger E2 zum Anregen von Vibrationen des zweiten Vibrationselements V2 sowie wenigstens einen ebenfalls an die Meß- und Betriebselektronik elektrisch angeschlossenen, insb. elektrodynamischen, dritten Schwingungssensor S3 zum Erfassen von Vibrationen des Vibrationselements V2 auf. Das Vibrationselement V2 des erfindungsgemäßen Meßsystems ist weiters dafür eingerichtet, zumindest zeitweise von einem Anteil des Mediums kontaktiert und währenddessen, angeregt vom Schwingungserreger E2, vibrierengelassen zu werden, derart, daß auch das Vibrationselement V2 zumindest anteilig Resonanzschwingungen, nämlich mechanische Schwingungen mit einer - ebenfalls von der Dichte des kontaktierenden Mediums mitbestimmten - zweiten Resonanzfrequenz $f_{r2}$ ausführt. Der Schwingungssensor S3 wiederum generiert ein von Vibrationen des Vibrationselements V2 abhängiges drittes Schwingungssignal s3, das eine nämlicher Resonanzfrequenz $f_{r2}$ entsprechende Signal-frequenz aufweist. Die der der Meß- und Betriebselektronik zugeführten Schwingungssignale werden dort in in der üblichen Weise aufgearbeitet, nämlich vorverstärkt, gefiltert und digitalisiert, werden und hernach mittels entsprechend programmierter Rechenalgorithmen computerbasiert weiter ausgewertet.

Indem der Meß- und Betriebselektronik sowohl die beiden Schwingungen des ersten Vibrationselements V1 repräsentierenden Schwingungssignale s1, s2 als auch das wenigstens eine Schwingungen des zweiten Vibrationselements V2 repräsentierenden Schwingungssignals s3 zugeführt sind, stehen dieser im Ergebnis zunächst Informationen sowohl betreffend die Massendurchflußrate $m_1$, nämlich inform der zwischen den Schwingungssignalen s1, s2 existie-renden Phasendifferenz $\Delta_{\varphi r1}$, als auch betreffend die momentane Dichte $\rho$ des Mediums, nämlich inform der Signalfrequenz des Schwingungssignals s3, zur Verfügung. Die Meß- und Betriebselektronik des erfindungsgemäßen Meßsystems ist ferner dafür eingerichtet, mittels des ersten, zweiten und dritten Schwingungssignals s1, s2, s3, nämlich basierend auf der zwischen den Schwingungssignalen s1, s2 existierenden Phasendifferenz $\Delta_{\varphi12}$ sowie basierend auf der der Resonanzfrequenz $f_{r2}$ des Vibrationselements V2 entsprechende Signalfrequenz des Schwingungssignals s3, einen die Volumendurchflußrate repräsentierenden Meßwert $X_v$ und/oder einen den Volumendurchfluß repräsentierenden Meßwert $X_V$, insb. auch wiederkehrend, zu generieren bzw. als gültigen Meßwert X $(X_v \rightarrow X; X_V \rightarrow X)$ auszugeben. Im besonderen sind dafür beim zweiten Vibrationselement V2 solche Resonanzschwingungen angeregt, deren Resonanzfrequenz zum einen sehr gut mit der zu ermittelnden Dichte des Mediums korreliert sind, und die zum anderen auch eine möglichst hohe Empfindlichkeit gegenüber allfälligen Änderungen der Dichte aufweist, mithin dienen beim erfindungsgemäßen Meßsystem solche Resonanzschwingungen des Vibrationselements V2 als Nutzmode-Schwingungen, die eine hohe Auflösung auch geringfügiger Dichteschwankungen ermöglichen. Dementsprechend ist die Meß- und Betriebselektronik nach einer weiteren Ausgestaltung der Erfindung ferner auch dafür eingerichtet, zumindest zeitweise ein zweites Treibersignal e2 für den zweiten Schwingungserreger E2 zu generieren, das eine der (momentanen) Re-sonanzfrequenz $f_{r2}$ des zweiten Vibrationselements V2 entsprechende Signalfrequenz aufweist, wobei auch nämliche Signalfrequenz - analog wie beim Treibersignal e1 - basierend auf dem Sensorsignals s3, insb. auch auf dessen Signalfrequenz, von der Meß- und Betriebelektronik wiederkehrend an die momentane Resonanzfrequenz fr2 des Vibrationselements V2 angepaßt wird. Zwecks der Generierung des Treibersignals e2 kann die erwähnte Treiberschaltung der Meß- und Betriebselektronik beispielsweise zusätzlich zu dem erwähnten Ausgangskanal für das Treibersignal e1 einen weiteren, separaten - beispielsweise mittels einer entsprechenden Phasen-Regelschleife zum Ermitteln der mo-

mentanen Resonanzfrequenz $f_{r2}$ bzw. zum Einstellen der entsprechenden Signalfrequenz für das Treibersignal e2 und einem Stromregler zum Einstellen einer Stromstärke des Treibersignals e2 gebildeten - Ausgangskanal für Treibersignal e2 aufweisen.

Nach einer weiteren Ausgestaltung der Erfindung ist die Meß- und Betriebselektronik ferner auch dafür eingerichtet, beide Treibersignale e1, e2 zumindest zeitweise auch simultan zu generieren, derart, daß das erste Treibersignal e1 die der Resonanzfrequenz $f_{r1}$ des ersten Vibrationselements V1 entsprechende Signalfrequenz und das zweite Treibersignal e2 die der Resonanzfrequenz $f_{r2}$ des zweiten Vibrationselements V2 entsprechende Signalfrequenz aufweisen, so daß im Ergebnis beide Vibrationselemente V1, V2 zeitgleich mit ihrer jeweils momentanen Resonanzfrequenz $f_{r1}$ bzw. $f_{r2}$ vibrieren. Ferner kann die Meß- und Betriebselektronik hierbei auch so ausgestaltet sein - etwa für den Fall, daß die Dichte des Mediums nur sehr langsam und/oder nur in sehr geringem Maße veränderlich ist, und/oder für den Fall, daß die Dichte vorübergehend auch anhand des ersten und/oder zweiten Schwingungssignals s1, s2 ausreichend genau gemessen werden kann - , daß sie das Treibersignal e1 für den ersten Schwingungserreger E1 über einen bestimmten Zeitraum ununterbrochen generiert, mithin das Vibrationselement V1 über nämlichen Zeitraum ununterbrochen vibrieren gelassen ist, und während dieses Zeitraums das Treibersignal e2 für den zweiten Schwingungserreger E2 nur gelegentlich liefert und somit das Vibrationselement V2 während nämlichem Zeitraum auch nur zeitweise vibrieren gelassen ist bzw. zeitweise in Ruhe ist.

Nach einer weiteren Ausgestaltung der Erfindung ist die Meß- und Betriebselektronik ferner dafür eingerichtet, basierend auf der der Resonanzfrequenz $f_{r2}$ des Vibrationselements V2 entsprechende Signalfrequenz des Schwingungssignals s3, insb. auch wiederkehrend, einen die die Dichte $\rho$ des in der Rohrleitung strömenden Mediums repräsentierenden Meßwert $X_\rho$ zu erzeugen bzw. als gültigen Meßwert X ($X_\rho \rightarrow X$) auszugeben und/oder basierend auf der zwischen den Schwingungssignalen s1, s2 existierenden Phasendifferenz $\Delta_{\varphi12}$ einen die Massendurchflußrate $m_1$ des durch das Vibrationselement V1 und/oder einen eine Massendurchflußrate des in der Rohrleitung strömenden Mediums repräsentierenden Meßwert $X_m$, insb. auch wiederkehrend, zu erzeugen bzw. als einen gültigen Meßwert X ($X_m \rightarrow X$) des Meßsystems auszugeben. Der die Dichte repräsentierende Meßwert $X_\rho$ kann anhand eines die Resonanzfrequenz $f_{r2}$ des Vibrationselements V2 momentan repräsentierenden Frequenz-Meßwerts $X_{fr2}$ und basierend auf der an und für sich bekannten Rechenvorschrift zur Ermittlung von Dichte-Meßwerten:

$$X_\rho = a_{20} + a_{21} \cdot \frac{1}{X_{fr2}^2} \qquad (1)$$

von der Meß- und Betriebselektronik wiederkehrend ermittelt werden, worin $a_{20}$, $a_{21}$ meßsystemspezifische, durch den konkreten mechanischen Aufbau des Vibrationselements V2 festgelegte Koeffizienten sind. Nämliche Koeffizienten $a_{20}$, $a_{21}$ können in an und für sich bekannter Weise mittels einer vorab durchgeführten (Naß-) Kalibrierung des Meßsystem ermittelt werden, derart, daß sie im Ergebnis mit kleinst möglicher Abweichung zwischen vorgegebenen tatsächlichen Massendurchflußraten und dafür von der Meß- und Betriebselektronik jeweils ermittelten Meßwerten $X_\rho$ vermitteln. Der Frequenz-Meßwerts $X_{fr2}$ wiederum kann beispielsweise anhand der der Resonanzfrequenz $f_{r2}$ entsprechenden Signalfrequenz des Sensorsignals s3 ermittelt, mithin direkt vom Sensorsignal s3 bzw. einem diesem entsprechenden Digitalsignal abgeleitet werden. Alternativ oder in Ergänzung kann der Frequenz-Meßwert $X_{fr2}$ aber beispielsweise auch vom Treibersignal e2 abgeleitet bzw. mittels der das Treibersignal e2 generierenden Treiberschaltung, z.B. auch basierend auf entsprechenden Ausgabewerten der dem Einstellen der Signalfrequenz des Treibersignals e2 dienenden Phasen-Regelschleife, ermittelt werden.

Analog wie der die Dichte repräsentierende Meßwert $X_\rho$ kann zudem auch der massendurchflußraterepräsentative Meßwert $X_m$ anhand eines mittels der Meß- und Betriebselektronik gleichermaßen vom Schwingungssignal s1 und/oder vom Schwingungssignal s2 abgeleiteten, die Resonanzfrequenz $f_{r1}$ des Vibrationselements V1 momentan repräsentierenden Frequenz-Meßwerts $X_{fr1}$, einem die Phasendifferenz $\Delta_{\varphi12}$ momentan repräsentierenden, mithin wiederkehrend ermittelten, ersten Phasen-Meßwert $X_{\Delta\varphi12}$ und basierend auf der dafür üblichen Rechenvorschrift zur Ermittlung von Massendurchfluß-Meßwerten:

$$X_m = b_{10} + b_{11} \cdot \frac{X_{\Delta\varphi12}}{X_{fr1}} \qquad (2)$$

von der Meß- und Betriebselektronik wiederkehrend ermittelt werden. Die in vorgenannter Rechenvorschrift (2) enthalten Koeffizienten $b_{10}$, $b_{11}$ sind wiederum meßsystemspezifisch, nämlich durch den konkreten mechanischen Aufbau des Vibrationselements V1 festgelegt, und können ebenfalls mittels einer vorab durchgeführten (Naß-) Kalibrierung des Meßsystem ermittelt werden. Der Frequenz-Meßwert $X_{fr1}$ kann wiederum aus dem Sensorsignal s1 bzw. einem diesem entsprechenden Digitalsignal und/oder aus dem Treibersignals e1 ermittelt werden. Der Frequenz-Meßwert $X_{fr1}$ kann aber beispielsweise auch mittels der dem Einstellen der Signalfrequenz des Treibersignals e1 dienenden Phasen-Regelschleife generiert werden. Alternativ oder in Ergänzung kann die Meß- und Betriebselektronik, wie bei mittels Vibrationselementen der in Rede stehenden Art gebildeten Meßsystemen durchaus üblich, ggf. auch dafür eingerichtet sein, mithin dazu verwendet werden, basierend auf der zur Anregung und Aufrechterhaltung von Schwingungen zumindest eines der Vibrationselemente, beispielsweise den ohnehin angeregten Resonanzschwingungen zumindest eines der beiden Vibrationselemente, eingespeisten elektrischer Erregerleistung, ggf. auch unter Berücksichtigung wenigstens eines der Schwingungssignals, einen eine Viskosität $\eta$ des Fluids repräsentierenden Viskositäts-Meßwert $X_\eta$ zu ermitteln.

Desweiteren kann die Meß- und Betriebselektronik zudem auch so ausgestaltet sein, daß sie den die Volumendurchflußrate repräsentierenden Meßwert $X_v$ bzw. den den Volumendurchfluß repräsentierenden Meßwert $X_V$ basierend auf der Beziehung $X_m/X_\rho$ bzw. basierend auf der Rechenvorschrift:

$$\frac{X_m}{X_\rho} = \frac{b_{10} + b_{11} \cdot \dfrac{X_{\Delta\varphi12}}{X_{fr1}}}{a_{20} + a_{21} \cdot \dfrac{1}{X_{fr2}^2}} \qquad (3)$$

ermittelt.

Die Programm-Codes für solche der Generierung von Meßwerten dienende Auswerteprogramme bzw. für der Ansteuerung der Vibrationselemente dienende Regelungsprogramme können z.B. in dem Fachmann geläufiger Weise in einem nicht-flüchtigen Datenspeicher EEPROM der Meß- und Betriebselektronik persistent gespeichert sein und beim Aufstarten der Meß- und Betriebselektronik in einen, z.B. in einem Mikroprozessor oder einen digitalen Signalprozessor (DSP) integrierten, flüchtigen Datenspeicher RAM geladen werden. Gleichermaßen können mittels derMeß- und Betriebselektronik ME im Betrieb generierte Meßwerte in einen solchen, ggf. auch denselben, flüchtigen bzw. in einen solchen nicht-flüchtigen Datenspeicher geladen und für eine spätere Weiterverarbeitung entsprechend vorgehalten werden.

Nicht zuletzt zwecks der Erzielung einer weitgehenden, idealerweise vollständigen, schwingungstechnischen Entkopplung der beiden Vibrationselemente V1, V2 voneinander, derart, daß beide Vibrationselemente, nicht zuletzt auch im jeweiligen Nutzmode, voneinander unabhängig, ggf. auch einzeln bzw. intermittierend, vibrierengelassen werden können, ohne Schwingungsenergie in das jeweilige andere Vibrationselement zu übertragen, weist das Vibrationselement V2 erfindungsgemäß eine Resonanzfrequenz $f_{r2}$ auf, die - insb. auch für den regelmäßig eintretenden Fall, daß beide Vibrationselemente V1, V2 gleichzeitig vom gleichen Medium kontaktiert sind, im übrigen aber auch jeweils eine stationäre Temperaturverteilung aufweisen - um mehr als 10 Hz von der Resonanzfrequenz $f_{r1}$ des Vibrationselements V1 abweicht. In vorteilhafter Weise sind die beiden Vibrationselemente V1, V2 hierbei so aufeinander abgestimmt, daß nämliche Resonanzfrequenz $f_{r2}$ kleiner ist, als die Resonanzfrequenz $f_{r1}$; dies im besonderen auch in der Weise, daß die Resonanzfrequenz $f_{r2}$ des Vibrationselements V2 weniger als 90% der Resonanzfrequenz $f_{r1}$ des Vibrationselements V1 entspricht. Zum mechanischen Entkoppeln der beiden Vibrationselemente V1, V2 in der vorgenannten Weise sind diese ferner so dimensioniert, daß - zumindest bei stationärer Temperaturverteilung im Meßsystem - eine einer niedrigsten Resonanzfrequenz des nicht von Medium kontaktierten Vibrationselements V1 entsprechende, niedrigste mechanische Eigenfrequenz des Vibrationselements V1 von einer niedrigsten mechanischen Eigenfrequenz des zweiten Vibrationselements V2, also einer niedrigsten Resonanzfrequenz des nicht von Medium kontaktierten Vibrationselements V2, verschieden ist; dies beispielsweise derart, daß nämliche niedrigste mechanische Eigenfrequenz des Vibrationselements V1 kleiner ist als nämliche niedrigste mechanischen Eigenfrequenz des Vibrationselements V2. In entsprechender Weise ist auch die Meß- und Betriebselektronik nach einer weiteren Ausgestaltung der Erfindung dafür eingerichtet, beide Treibersignale e1, e2 simultan zu generieren, derart, daß die Signalfrequenz des zweiten Treibersignals e2 kleiner ist als die Signalfrequenz des ersten Treibersignals e1, beispielsweise weniger als 90% der Signalfrequenz des Treibersignals e1 entspricht, und/oder daß nämliche Signalfrequenz des zweiten Treibersignals e2 um mehr als 10 Hz von der Signalfrequenz des ersten Treibersignals e1 abweicht.

Wie u.a. in den Fig. 3, 4, und 5 angedeutet, weist auch das zweite Vibrationselement V2 ein Lumen zum Führen von strömendem Medium auf, wobei das Vibrationselement V2 wiederum so an die Rohrleitung so anschließbar ist, daß dessen Lumen zumindest temporär mit einem Lumen der Rohrleitung kommuniziert. Dementsprechend ist auch das zweite Vibrationselement V2 mittels eines schwingfähig am bzw. im Gehäuse H gehaltenen Meßrohrs 21 gebildet, das im Betrieb des Meßsystems zumindest temporär mit der Rohrleitung kommuniziert und zwecks der Generierung der erwähnten Resonanzschwingungen über eine baulich vorgegebenen freie Schwinglänge zumindest temporär vibrieren gelassen ist, beispielsweise auch simultan mit dem Vibrationselement V1. Nach einer weiteren Ausgestaltung der Erfindung ist hierbei ferner vorgesehen, daß das Meßrohr 11eine freie Schwinglänge aufweist, die größer als eine freie Schwinglänge ist, die das Meßrohr 21 aufweist. Das wenigstens eine das Vibrationselement V2 bildende Meßrohr 21 ist gekrümmt und kann dabei zudem auch eine für solche Meßrohre gebräuchliche Rohrform haben, beispielsweise also eine kreisbogen-förmige, trapez-förmige, V-förmige, U-förmige, S-förmige, Z-förmige oder helix-förmige Silhouette aufweisen. Darüberhinaus kann das Meßrohr 21 beispielsweise auch aus dem gleichen Material, wie das wenigstens eine das Vibrationselmeent V1 bildende Meßrohr 11 bzw. auch aus einem anderen für derartige Vibrationselemente üblichen Material gefertigt sein, beispielsweise also ein aus Edelstahl oder auch aus einer Titan-, einer Tantal- und/oder einer Zirconium-Legierung hergestelltes Metallrohr sein. Als aktiv angeregte Resonanzschwingungen können dementsprechend - analog wie beim Vibrationselement V1 - ebenfalls Schwingungen eines natürlichen Eigenmodes des Vibrationselements V2 dienen, bei denen das Meßrohr 21 zumindest anteilig Biegeschwingungen um eine dessen beiden Rohrenden imaginär verbindende gedachte Schwingungsachse ausführt. Im besonderen ist die Meß- und Betriebselektronik hierbei dafür eingerichtet, das Treibersignal e2 mit einer der momentanen Resonanzfrequenz des Biegeschwingungsgrundmodes des des Vibrationselements V2 anzuregen, jenes Eigenmodes also, in dem das das Vibrationselmeent V2 bildende Meßrohr 21 solche Biegeschwingungen ausführt, die über die gesamte freie Schwinglänge lediglich einen einzigen Schwingungsbauch aufweisen.

Erfindungsgemäß ist das Vibrationselement V2, wie auch in den Fig. 2a, 2b, 3 schematisch dargestellt, nicht mittels nur eines einzigen, sondern mittels wenigstens zweier baugleicher, zueinander zumindest abschnittsweise parallel verlaufend angeordneter, beispielsweise auch mittels Strömungsteiler zueinander strömungstechnisch parallel geschalteter, Meßrohre 21, 22 gebildet. Dies im besonderen auch in der Weise, daß das Vibrationselement V2, wie auch in Fig. 2a bzw. 2b angedeutet, mittels wenigstens zweier gekrümmter Meßrohre 21, 22 gebildet ist, die unter Bildung möglichst gleichlanger freier Schwinglängen lediglich punktuell mechanisch miteinander gekoppelt sind, beispielsweise wiederum mittels an den Endbereichen der Meßrohre fixierten Knotenplatten. Das zweite Vibrationselement V2 kann hierbei demnach auch so ausgebildete sein, daß es beispielsweise einem der in den eingangs erwähnten CN-A 10 18 58 765, US-A 57 96 011, US-B 67 11 958 oder WO-A 00/57141, gezeigten Vibrationselemente entspricht. Als zweites Vibrationselement V2 können, nicht zuletzt für den Fall, daß das Meßsystem für Anwendungen mit gasförmigen oder auch dünnflüssigen Medien von weniger als 60 mPa·s vorgesehen ist, aber beispielsweise auch in Mikrosystemtechnik hergestellte Vibrationselemente (MEMS) dienen, wie sie u.a. auch in den US-A 2010/0043569, US-B 79 21 737, US-B 78 23 445 , US-B 74 37 912, US-B 64 77 901 bzw. WO-A 2007/147786 gezeigt sind, mithin kann das Vibrationselement V2 mittels auch eines Meßrohrs gebildet sein, das ein Kaliber von weniger als 0,5 mm aufweist. Zugleich kann das Vibrationselement V1 beispielsweise mittels zwei oder mehr Meßrohren gebildet sein, von denen jedes ein Kaliber von mehr als 40 mm aufweist.

Wie aus einer Zusammenschau der Fig. 1, 2a, 2b, 3, 4, 5, 6, 7a, 7b ohne weiteres ersichtlich, sind in vorteilhafter Weise sowohl das erste als auch das zweite Vibrationselement V1, V2 auch innerhalb ein und desselben Lumens des Gehäuses H, nämlich innerhalb des Lumens H', untergebracht. Nach einer weiteren Ausgestaltung der Erfindung sind die beiden Vibrationselemente V1, V2 bevorzugt so hinsichtlich ihrer Einbaumaße dimensioniert, daß das Vibrationselement V2 sowohl hinsichtlich einer - im Fall der Bildung nämlichen Vibrationselements V2 mittels wenigstens eines Meßrohrs von der dafür gewählten Schwinglänge abhängige - Einbaulänge (z-Richtung) als auch einer Einbauhöhe (y-Richtung) wie auch einer Einbaubreite (x-Richtung), mithin in allen drei Raumkoordinaten, x, y, z jeweils kleiner bemessen ist als das Vibrationselement V1. Dies im besonderen auch in der Weise, daß beide Vibrationselemente V1, V2 auch innerhalb eines solchen Gehäuses untergebracht werden können, das auch für herkömmliche, beispielsweise als Coriolis-Massedurchfluß-Meßgeräte eingesetzte, Meßsysteme mit nur einem, nämlich dem Vibrationselement V1 entsprechenden Vibrationselement bis anhin verwendet worden ist. Dafür weist das wenigstens eine Meßrohr 11 bzw. jedes der Meßrohre, mittels dem das Vibrationselement V1 gebildet ist, nach einer weiteren Ausgestaltung der Erfindung ein Kaliber (DN11) auf, das größer als ein Kaliber (DN21) ist, das das wenigstens eine Meßrohr 21 bzw. jedes der Meßrohre, mittels dem das Vibrationselement V2 gebildet ist, aufweist. Dies im besonderen derart, daß das nämliches Kaliber des Meßrohrs 11 mehr als ein 5-faches des Kalibers des Meßrohrs 21 (DN11 > 5 DN21), insb. auch mehr als ein 10-faches des Kalibers des Meßrohrs 21 (DN11 > 10 · DN21), beträgt.

Das zweite Vibrationselement V2 ist bei den in den Fig. 1 bis 7b gezeigten Ausführungsbeispielen ferner dafür eingerichtet, in dessen Lumen zumindest zeitweise jeweils einen mit einer zweiten Massendurchflußrate $m_2$ strömenden Anteil des Mediums zu führen und währenddessen, insb. mit der Resonanzfrequenz $f_{r2}$, vibrieren gelassen zu werden. Dies im besonderen auch in der Weise, daß die beiden Vibrationselemente V1, V2 zumindest zeitweise gleichzeitig jeweils von Medium durchströmt zu werden. In Anbetracht dessen, daß einerseits das Vibrationselement V2 hauptsächlich dazu dient, das Schwingungssignal s3 mit einer der Resonanzfrequenz $f_{r2}$ des Vibrationselements V2 entsprechenden, mithin mit der Dichte des Mediums korrelierten Signalfrequenz zu liefern, andererseits die Dichte sich, nicht zuletzt auch im Vergleich zur Massendurchflußrate $m_1$, zumeist nur langsam ändert, ist es beim erfindungsgemäßen Meßsystem ferner ohne weiteres möglich, die beiden Vibrationselemente V1, V2 so auszubilden, daß die Massendurchflußrate $m_2$ mit der der in Lumen des Vibrationselements V2 geführte Anteil des Mediums strömt, kleiner ist als die Massendurchflußrate $m_1$, mit der der in Lumen des Vibrationselements V1 geführte Anteil des Mediums strömt; dies im besonderen in der Weise, daß eine maximal mögliche bzw. zulässige Massendurchflußrate im Vibrationselement V1 mehr als einem 10-fachen, insb. auch mehr als einem 100-fachen, einer maximal möglichen bzw. zulässigen Massendurchflußrate im Vibrationselement V2 entspricht. Daher sind nach einer weiteren Ausgestaltung der Erfindung das erste und zweite Vibrationselement V1, V2 bzw. deren jeweiliges Lumen ferner so bemessen, daß das Vibrationselement V1 einen Strömungsquerschnitt aufweist der größer als ein Strömungsquerschnitt ist, den das Vibrationselement V2 aufweist bzw. daß das Vibrationselement V2 einen Strömungswiderstand aufweist, der größer ist als ein Strömungswiderstand, den das Vibrationselement V1 aufweist. Für den oben erwähnten Fall, daß beide Vibrationselemente V1, V2 innerhalb eines einzigen Gehäuses untergebracht sind, kann es zudem von Vorteil sein, das Vibrationselement V2 so auszugestalten, daß dessen Strömungswiderstand so groß wie möglich ist bzw. dessen Strömungsquerschnitt so klein wie möglich ist, nämlich das Vibrationselement V2 so zu auszugestalten, daß bei einem für die Massendurchflußrate $m_1$ vorgegebenen meßsystemspezifischen Minimalwert und einer für die Viskosität des Mediums vorgegebenen meßsystemspezifischen Maximalwert die Massendurchflußrate $m_2$ einen dafür vorgegebenen, beispielsweise weniger als weniger als 10% des für die Massendurchflußrate $m_1$ vorgegebenen meßsystemspezifischen Maximalwerts entsprechenden, meßsystemspezifischen Minimalwert eben gerade noch erreicht. Im Ergebnis dessen kann somit auch ein solches Vibrationselement V2, dessen Einbaumaße am besten in den im Gehäuse neben dem Vibrationselement V1 noch verbleibenden Einbauplatz passen, bzw. kann aus einer Anzahl von potentiell für das Vibrationselement V2 möglichen Bauformen eine solche leicht aufgefunden werden, die zum Erreichen einer möglichst guten Korrelation zwischen zu messender Dichte und diese repräsentierender Signalfrequenz des Schwingungssignal s3, mithin zum Erreichen einer möglichst hohen Genauigkeit bei der Dichtemessung nämlichen Einbauplatz im Gehäuse am besten ausnutzt.

Gemäß einer weiteren Ausgestaltung der Erfindung ist das Vibrationselement V2, wie in Fig. 3 bzw. 4 schematisch angedeutet, ferner dafür eingerichtet, in den Verlauf der Rohrleitung eingesetzt und so daran, nämliche an deren Leitungssegmente L11, L12, angeschlossen zu werden, daß das Lumen des Vibrationselements V2 mit dem jeweiligen Lumen jedes der beiden Leitungssegmente L11, L12 der Rohrleitung kommuniziert und somit - parallel zu dem wenigstens einen mittels des ersten Vibrationselement V1 gebildeten Strömungspfad - ein Fluidströmung vom Leitungssegment L11, weiters auch durch das Vibrationselement V2 hindurch bis hin zum Leitungssegment L12 ermöglichender Strömungspfad, mithin mittels des Vibrationselements V2 bzw. dessen Lumen ein das Lumen des Vibrationselements V1 bzw. dessen Lumen strömungstechnisch überbrückender Bypaß gebildet ist.

Nicht zuletzt für diesen vorgenannten Fall, bei dem das Vibrationselement V2 strömungstechnisch parallel zum Vibrationselement V1 geschaltet ist kann es zudem von Vorteil sein, im Betrieb des Meßsystems auch die Massendurchflußrate $m_2$ zu ermitteln, beispielsweise wenn die Massendurchflußrate $m_2$ über einen längeren Zeitraum von mehr als 10 s (Sekunde) solche Werte annimmt, die im zeitlichen Mittel mehr als 0.5% der Massendurchflußrate $m_1$ entsprechen, und/oder wenn eine Vernachlässigung der Massendurchflußrate $m_2$ bei Berechnung der Volumendurchflußrate bzw. des Volumendurchflusses allein anhand der Massendurchflußrate $m_1$ zu einen nicht mehr tolerierbaren Meßfehler bei der Ermittlung der Meßwerte $X_v$ bzw. der Meßwerte $X_V$ zur Folge hätte. Daher umfaßt das Meßsystem nach einer weiteren Ausgestaltung der Erfindung desweiteren wenigstens einen vom dritten Schwingungssensor S3 beabstandeten vierten Schwingungssensor S4 zum Erfassen von Vibrationen des zweiten Vibrationselements. Nämlicher Schwingungssensor S4 ist hierbei dafür eingerichtet, ebenfalls ein von Vibrationen des zweiten Vibrationselements V2 abhängiges viertes Schwingungssignal s4 zu generieren, derart, daß nämliches Schwingungssignal s4 eine zur Signalfrequenz des Schwingungssignals s3 gleiche, mithin ebenfalls der zweiten Resonanzfrequenz $f_{r2}$ entsprechende Signalfrequenz sowie relativ zum dritten Schwingungssignal s3 eine von der Massendurchflußrate $m_2$ abhängige Phasendifferenz $\Delta\varphi_{r34}$ aufweist. Ferner ist die Meß- und Betriebselektronik hierbei auch dafür eingerichtet, Meßwerte $X_v$ bzw. Meßwerte $X_V$ auch mittels des Schwingungssignals s4, nämlich basierend auf der Phasendifferenz $\Delta\varphi_{34}$, bzw. basierend auf einem wiederkehrend ermittelten, nämliche Phasendifferenz $\Delta\varphi_{34}$ momentan repräsentierenden, mithin wiederkehrend ermittelten, zweiten Phasen-Meßwert $X_{\Delta\varphi34}$ zu generieren. Dies beispielsweise derart, daß die bereits erwähnte Rechenvorschrift (3) zur Berechnung des Meßwerts $X_v$ bzw. des Meßwerts $X_V$ wie folgt modifiziert ist:

$$\frac{X_m}{X_\rho} = \frac{b_{10} + b_{11} \cdot \dfrac{X_{\Delta\varphi12}}{X_{fr1}} + b_{20} + b_{21} \cdot \dfrac{X_{\Delta\varphi34}}{X_{fr2}}}{a_{20} + a_{21} \cdot \dfrac{1}{X_{fr2}^2}} \qquad (4)$$

Die darin enthalten Koeffizienten $b_{20}$, $b_{21}$ sind wiederum meßsystemspezifisch, nämlich durch den konkreten mechanischen Aufbau des Vibrationselements V2 festgelegt, und können ebenfalls mittels einer entsprechenden, beispielsweise auch zeitgleich mit der zur Ermittlung der anderen Koeffizienten $a_{20}$, $a_{21}$ bzw. $b_{10}$, $b_{11}$ ohnehin durchgeführten Kalibrierung, (Naß-) Kalibrierung des Meßsystem ermittelt werden. Dementsprechend kann dann auch der Massendurchfluß-Meßwert $X_m$ für die insgesamt im Meßsystem herrschende (Gesamt-) Massendurchflußrate bzw. einen entsprechenden (Gesamt-) Massendurchfluß für das erwähnte Meßintervall unter Berücksichtigung vorgenannter Formel (4) noch genauer basierend auf folgender Rechenvorschrift berechnet werden:

$$X_m = b_{10} + b_{11} \cdot \frac{X_{\Delta\varphi12}}{X_{fr1}} + b_{20} + b_{21} \cdot \frac{X_{\Delta\varphi34}}{X_{fr2}} \qquad (5)$$

Alternativ oder in Ergänzung können auch die beiden Massendurchflußraten $m_1$, $m_2$ einzeln, z.B. in der folgenden Weise:

$$X_{m1} = b_{10} + b_{11} \cdot \frac{X_{\Delta\varphi12}}{X_{fr1}},$$

$$X_{m2} = b_{20} + b_{21} \cdot \frac{X_{\Delta\varphi34}}{X_{fr2}} \qquad (6)$$

ermittelt und mittels entsprechender Meßwerte $X_{m1}$ bzw. $X_{m2}$ ausgegeben, beispielsweise auch vor Ort angezeigt, werden.

Alternativ zur vorbeschrieben Variante, bei der das Vibrationselement V2 also strömungstechnisch in einem Bypass zum Vibrationselement V1 geschaltetet ist, kann das Vibrationselement V2, wie in Fig. 5 schematisch angedeutet, aber auch so mit der Rohrleitung verbunden sein, daß durch den mittels des Vibrationselements V2 gebildeten Strömungspfad die Massendurchflußrate des strömenden Mediums vom Leitungssegment L11 bis zum hin zum Leitungssegment L12 im wesentlichen nicht verändert wird, mithin zumindest bei stationärer Strömung die erste Massendurchflußrate $m_1$ im wesentlichen gleich einer momentanen Massendurchflußrate des Mediums im Leitungssegment L11 wie auch im Leitungssegment L12 ist bzw. die Phasendifferenz $\Delta\varphi_{12}$ im wesentlichen nämlicher Massendurchflußrate des Mediums in Leitungssegmenten L11, L12 entspricht. Zum Anschließen des Vibrationselements V2 an die Rohrleitung, nicht zuletzt auch zwecks Bereitstellung des vorgenannten Strömungspfads, weist nach einer weiteren Ausgestaltung der Erfindung das Gehäuseende H1 wenigstens eine Strömungsöffnung $O_{ii,1}$ zweiter Art - nämlich eine mit dem Vibrationselement V2 kommunizierende Strömungsöffnung auf. Diese kann beispielsweise mittig des Gehäusendes H1 oder aber auch, wie in Fig. 2a dargestellt, außermittig im Gehäusendes H1, insb. mit einem etwa einem 0.2- bis 0.3-fachen der nomiellen Nennweite des Meßsystems entsprechenden Abstand vom Zentrum des Gehäusendes H1, angeordnet sein. Ferner weist hierbei entweder das Gehäuseende H2, wie aus der Zusammenschau der Fig. 2a, 2b, 3, 4, 7a bzw. 7b ohne weiteres ersichtlich, wenigstens eine Strömungsöffnung $O_{ii,1}$ zweiter Art - nämlich eine mit dem Vibrationselement V2 kommunizierende Strömungsöffnung - auf, oder aber weist eines der beiden Gehäuseenden, im in Fig. 5 gezeigten Ausführungsbeispiel nämlich das Gehäuseende H1, zwei voneinander entfernte Strömungsöffnungen $O_{ii,1}$, $O_{ii,2}$ zweiter Art auf. Anderseits weist das wenigstens eine Meßrohr 21, mittels dem das Vibrationselement V2 gebildet ist, dementsprechend jeweils ein mit der Strömungsöffnung $O_{ii,1}$, zweiter Art kommunizierendes erstes Rohrende sowie ein in mit der Strömungsöffnung $O_{ii,2}$ zweiter Art kommunizierendes zweites Rohrende auf.

Nicht zuletzt zwecks einer Vermeidung von dessen Schwingungen bzw. dessen Sensorsignal S3 potentiell beeinflussenden Störeinflüssen und/oder zwecks einer möglichst guten Ausnutzung des insgesamt angebotenen Einbauplatzes, kann es von Vorteil sein, das Vibrationselement V2 nicht unmittelbar an beide Strömunsgöffnungen $O_{ii,1}$, $O_{ii,2}$ zweiter Art anzuschließen, sondern, wie in den Fig. 3, 4 bzw. 5 schematisch dargestellt, mittels wenigstens einer, beispielsweise flexiblen und/oder gebogenen, strömungstechnisch zwischengeschalteten Anschlußleitung. Nach einer weiteren Ausgestaltung der Erfindung ist daher das Vibrationselement V2 ferner, mittels wenigstens einer, beispielsweise flexiblen und/oder gebogenen, ersten Anschlußleitung L21 an die erste Strömungsöffnung $O_{ii,1}$ zweiter Art angeschlossen. Darüberhinaus kann das Vibrationselement V2 zudem auch mittels einer, beispielsweise flexiblen und/oder gebogenen, zweiten Anschlußleitung L22 an die zweiten Strömungsöffnung $O_{ii,2}$ zweiter Art angeschlossen sein, dies beispielsweise auch so, daß das via Anschlußleitungen L21, L22 an die Rohrleitung angeschlossene Vibrationselement V2 von beiden Gehäusenenden H1, H2 entfernt innerhalb des Gehäuses H plaziert ist.

Nach einer weiteren Ausgestaltung der Erfindung umfaßt das Meßsystem ferner einen an die Meß- und Betriebselektronik ME elektrisch angeschlossenen ersten Temperatursensor T1 zum Erfassen einer Temperatur $\vartheta1$ des Vibrationselements V1, der dazu dient, zusammen mit der Meß- und Betriebselektronik ein von nämlicher Temperatur $\vartheta1$ des Vibrationselements V1 abhängiges erstes Temperatursignal $\theta1$ zu generieren, sowie einen ebenfalls an die Meß- und Betriebselektronik elektrisch angeschlossenen zweiten Temperatursensor T2 zum Erfassen einer Temperatur $\vartheta2$ des Vibrationselements V2, der dafür eingerichtet ist, zusammen mit der Meß- und Betriebselektronik ein von nämlicher Temperatur $\vartheta2$ des Vibrationselements V2 abhängiges zweites Temperatursignal $\theta2$ zu generieren, welche beiden Temperatursignale θ1, θ2 mittels der Meß- und Betriebselektronik dann weiter verarbeitet und ausgewertet werden. Der Temperatursensor T1 kann beispielsweise - wie bei Vibrationselementen der in Rede stehenden Art durchaus üblich - das Vibrationselement V1 kontaktierend im Meßsystem angeordnet sein, etwa auf einer vom Lumen des Vibrationselements V1 abgewandten, mithin nicht vom Medium kontaktierten Seite bzw. Oberfläche des Vibrationselements V1. Gleichermaßen kann auch der zweite Temperatursensor T2 das Vibrationselement V2 kontaktierend im Meßsystem angeordnet sein, beispielsweise also auch auf einer nicht von Medium kontaktierten Oberfläche des Vibrationselements V2. Als Temperatursensor T1 bzw. T2 kann beispielsweise jeweils ein auf das jeweilige Vibrationselement, ggf. auch unter Zwischenlage eines entsprechenden Trägersubstrates, aufgebrachtes Platin-Widerstandselement dienen, das unter Bildung eines Widerstandsthermometers, etwa eines Pt100-Widerstandsthermometers oder eines Pt1000-Widerstandsthermometers, mit der Meß- und Betriebselektronik elektrisch verbunden ist, beispielsweise jeweils mittels eines - hier aus Gründen besserer Übersichtlichkeit ebenfalls nicht gezeigten - weiteren Paares von Anschlußdrähten. Die Meß- und Betriebselektronik ist hierbei ferner dafür eingerichtet, die Temperatursignale θ1, θ2 auch in der Weise zu verarbeiten und auszuwerten, daß die Volumendurchflußrate v bzw. der Volumendurchfluß v repräsentierende Meßwerte mittels des ersten Temperatursignals θ1 und/oder mittels des zweiten Temperatursignals θ2 generiert wird, mithin die mittels des Temperatursensors T1 erfaßte Temperatur $\vartheta1$ des Vibrationselements V1 bzw. die mittels des Temperatursensors T2 erfaßte Temperatur $\vartheta2$ des Vibrationselements V2 bei der Ermittlung der Volumendurchflußrate v bzw. des Volumendurchflusses v einzeln berücksichtigt werden. Beispielsweise kann dadurch die Genauigkeit, mit der der die Dichte $\rho$ des im Vibrationselement V2 geführten Mediums repräsentierende Meßwert $X_\rho$ mit nämlicher Dichte $\rho$ übereinstimmt, dadurch sehr einfach weiter verbessert werden, indem beispielsweise die oben erwähnte Rechenvorschrift (1) zur Ermittlung des Meßwerts $X_\rho$ unter Berücksichtigung eines mittels der Meß- und Betriebselektronik vom Temperatursignal $\theta_2$ gewonnenen, die Temperatur $\vartheta_2$ momentan repräsentierenden Temperatur-Meßwerts $X_{\vartheta2}$ sowie eines weiteren, beispielsweise im Zuge der bereits erwähnten (Naß-) Kalibrierung des Meßsystem ermittelten, meßsystemspezifischen Koeffizienten $a_{23}$ wie folgt modifiziert wird:

$$X_\rho = a_{20} + a_{21} \cdot \frac{1}{X_{fr2}^2} + a_{23} \cdot \frac{X_{\vartheta2}}{X_{fr2}^2} \tag{7},$$

wodurch der Einfluß der Temperatur $\vartheta2$ auf die Resonanzfrequenz $f_{r2}$ des Vibrationselements V2 zumindest teilweise kompensiert wird. Gleichermaßen kann basierend auf dem Temperatursignal $\theta_1$ zudem auch die Genauigkeit, mit der die massendurchflußrepäsentativen Meßwerte $X_m$ ermittelt werden, weiter verbessert, mithin der Einfluß der Temperatur $\vartheta1$ auf die Phasendifferenz $\Delta_{\varphi12}$ zumindest teilweise kompensiert werden, indem auch die oben erwähnte Rechenvorschrift (2) zur Ermittlung des Meßwerts $X_m$ unter Hinzunahme eines mittels der Meß- und Betriebselektronik vom Temperatursignal $\theta_1$ gewonnenen, die Temperatur $\vartheta_1$ momentan repräsentierenden Temperatur-Meßwerts $X_{\vartheta1}$ sowie eines weiteren, beispielsweise ebenfalls im Zuge der bereits erwähnten (Naß-) Kalibrierung des Meßsystem ermittelten, meßsystemspezifischen Koeffizienten $b_{13}$ entsprechend zu:

$$X_m = b_{10} + \frac{b_{11}}{1 + b_{13} \cdot X_{\vartheta1}} \cdot \frac{X_{\Delta\varphi12}}{X_{fr1}} \tag{8}$$

modifiziert wird, bzw. können unter Berücksichtigung beider Temperatursignalen $\theta_1$, $\theta_2$, der Einfluß der Temperatur $\vartheta1$ auf die Phasendifferenz $\Delta_{\varphi12}$ bzw. der Einfluß der Temperatur $\vartheta2$ auf die Phasendifferenz $\Delta\varphi_{34}$ zumindest teilweise kompensiert werden, indem die Rechenvorschrift (5) - unter Hinzunahme zweier meßsystemspezifischen Koeffizienten $b_{13}$, $b_{23}$-folgendermaßen:

$$X_m = b_{10} + \frac{b_{11}}{1 + b_{13} \cdot X_{\vartheta1}} \cdot \frac{X_{\Delta\varphi12}}{X_{fr1}} + b_{20} + \frac{b_{21}}{1 + b_{23} \cdot X_{\vartheta2}} \cdot \frac{X_{\Delta\varphi34}}{X_{fr2}} \tag{9}$$

modifiziert wird.

Basierend auf der vorgenannten Rechenvorschrift (7) für die verbesserte, nämlich temperaturkompensierte Berechnung des Dichte-Meßwerts $X_\rho$ sowie der Rechenvorschrift (8) bzw. (9) können dementsprechend auch Einflüsse der Temperaturen $\vartheta_1$, $\vartheta_2$ auf die Genauigkeit der Messung der Volumendurchflußrate bzw. des Volumendurchflusses bei der Ermittlung der Meßwerte $X_v$ bzw. der Meßwerte $X_V$ entsprechend berücksichtigt bzw. kompensiert werden, beispielsweise durch eine der folgenden Modifizierungen der oben erwähnte Rechenvorschrift (3):

$$\frac{X_m}{X_\rho} = \frac{b_{10} + \dfrac{b_{11}}{1 + b_{13} \cdot X_{\vartheta 1}} \cdot \dfrac{X_{\Delta\varphi 12}}{X_{fr1}}}{a_{20} + a_{21} \cdot \dfrac{1}{X_{fr2}^2} + a_{23} \cdot \dfrac{X_{\vartheta 2}}{X_{fr2}^2}} \quad \text{bzw.}$$

$$\frac{X_m}{X_\rho} = \frac{b_{10} + \dfrac{b_{11}}{1 + b_{13} \cdot X_{\vartheta 1}} \cdot \dfrac{X_{\Delta\varphi 12}}{X_{fr1}} + b_{20} + \dfrac{b_{21}}{1 + b_{23} \cdot X_{\vartheta 2}} \cdot \dfrac{X_{\Delta\varphi 34}}{X_{fr2}}}{a_{20} + a_{21} \cdot \dfrac{1}{X_{fr2}^2} + a_{23} \cdot \dfrac{X_{\vartheta 2}}{X_{fr2}^2}}, \tag{10}$$

so daß also im Ergebnis hernach auch die Volumendurchflußraten- bzw. Volumendurchfluß-Meßwerte keine oder nur vernachlässigbar geringe Abhängigkeiten von den Temperaturen $\vartheta_1$, $\vartheta_2$ aufweisen. Darüberhinaus kann basierend auf den beiden Temperatursignalen $\theta 1$, $\theta 2$ bzw. den davon abgeleiteten Temperatur-Meßwerten $X_{\vartheta 1}$, $X_{\vartheta 2}$ auch bei voneinander abweichenden Temperaturen $91$, $\vartheta 2$ - etwa infolge einer abrupt wechselnden bzw. in einem weiten Bereich schwankenden Temperatur des via Leitungssegment L11 in das Meßsystem einströmenden Mediums und einer damit einhergehend instationären Temperaturverteilung innerhalb des Meßsystems bzw. eines daraus resultierenden Temperaturgradienten zwischen den beiden Vibrationselementen V1, V2 - die von der momentanen Dichte des das Vibrationselement V2 momentan kontaktierenden Mediums wie auch von einer momentanen Temperatur $\vartheta 2$ des Vibrationselements V2 abhängige, anhand des Schwingungssignals s3 gemessene Resonanzfrequenz des Vibrationselements V2 in eine einer momentanen Temperatur $\vartheta 1$ des Vibrationselements V1 entsprechende, angenommene Resonanzfrequenz $f_{r2}$' des Vibrationselements V2 umgerechnet werden bzw. kann ein basierend auf dem Schwingungssignal s3 und dem Temperatursignal $\theta 2$ für das das Vibrationselement V2 momentan kontaktierende Medium zunächst ermittelter, provisorischer Dichte-Meßwert $X_\rho$' in den der momentanen Temperatur $\vartheta 1$ des Vibrationselements V1 entsprechenden Dichte-Meßwert $X_\rho$ für die momentane Dichte des im Vibrationselement V1 momentan geführten Mediums umgerechnet werden.

Nach einer weiteren Ausgestaltung der Erfindung umfaßt das Meßsystem ferner wenigstens einen an die Meß- und Betriebselektronik elektrisch angeschlossenen Verformungssensor D1 zum Erfassen einer - beispielsweise thermisch bedingten und/oder durch via Rohrleitung in das Meßsystem eingetragene Krafteinwirkung bewirkten - elastischen Verformung des ersten Vibrationselements V1. Der Verformungssensor D1 ist hierbei insbesondere dafür eingerichtet, zusammen mit der Meß- und Betriebselektronik ein von vorgenannter Verformung des Vibrationselements V1 abhängiges Verformungssignal d1 zu generieren und der Meß- und Betriebselektronik zu Verfügung zu stellen. Der Verformungssensor D1 kann beispielsweise mittels eines auf das Vibrationselement V1, nämlich auf einer dessen Lumen abgewandter Seite, aufgeklebten Dehnungsmeßstreifens (DMS) gebildet sein, der mit der Meß- und Betriebselektronik elektrisch verbunden ist, beispielsweise jeweils mittels eines - hier aus Gründen besserer Übersichtlichkeit ebenfalls nicht gezeigten - weiteren Paares von Anschlußdrähten. Das mittels des Verformungssensors D1 generierte Verformungssignal d1 kann von der Meß- und Betriebselektronik beispielsweise dafür genutzt werden, um Einflüsse der vorgenannten elastischen Verformungen des Vibrationselements V1 auf dessen Schwingungseigenschaften bzw. damit einhergehende Verfälschungen etwa der Phasendifferenz $\Delta_{\varphi 12}$ entsprechend zu korrigieren. Daher ist die Meß- und Betriebselektronik nach einer weiteren Ausgestaltung der Erfindung dafür eingerichtet, den die Volumendurchflußrate repräsentierenden Meßwert $X_v$ und/oder den den Volumendurchfluß repräsentierenden Meßwert $X_V$ mittels des Verformungssignals zu generieren bzw. als gültigen Meßwert X ($X_V \to X$, $X_v \to X$) des Meßsystems auszugeben. Das Verformungssignal d1 kann - alternativ oder in Ergänzung - aber auch dafür dienen, mittels der Meß- und Betriebselektronik zu detektieren, ob das Vibrationselement V1 momentan keine elastischen Verformung der vorgenannten Art aufweist, so daß also auch dessen momentane Resonanzfrequenz $f_{r1}$ als eine genaues Maß für die Dichte des Mediums gut geeignet ist, mithin die Volumendurchflußrate repräsentierende Meßwerte $X_v$ bzw. den Volumendurchfluß repräsentierende Meßwerte $X_V$ momentan auch basierend auf der Signalfrequenz des ersten und/oder zweiten Schwingungssignals ermittel- und ggf. als gültige Meßwerte X des Meßsystems ausgebbar sind, oder aber ob das Vibrationselement V1 in einem solch hohen Maße deformiert ist, daß dessen Resonanzfrequenz $f_{r1}$ momentan kein ausreichend genaues Maß für die momentane Dichte des Mediums sein kann, mithin die Volumendurchflußrate repräsentierende Meßwerte $X_v$ bzw. den Volumendurchfluß repräsentierende Meßwerte $X_V$ vernünftigerweise basierend auf der Signalfrequenz des dritten Schwingungssignal s3 zu ermitteln sind.

Das erfindungsgemäße Meßsystem kann ferner auch zumindest zwei unterschiedliche, beispielsweise mittels des vorgenannten Verformungssignal d1 selektiv aktivierbare, Betriebsmoden für die die Ermittlung der Volumendurchflußrate bzw. des Volumendurchflusses des in der Rohrleitung strömenden Mediums aufweisen, nämlichen einen ersten Betriebsmode, in dem die Meß- und Betriebselektronik die als gültige Meßwerte X des Meßsystems dienenden Meßwerte $X_V$ ($X_V \rightarrow X$) bzw. $X_v$ ($X_v \rightarrow X$) basierend sowohl auf der Phasendifferenz $\Delta\varphi_{12}$ als auch auf der der Resonanzfrequenz $f_{r2}$ des Vibrationselements V2 entsprechenden Signalfrequenz des dritten Schwingungssignals s3 ermittelt, und einen alternativen zweiten Betriebsmode, in dem die Meß- und Betriebselektronik die als gültige Meßwerte X des Meßsystems dienenden Meßwerte $X_V$ bzw. $X_v$ basierend sowohl auf der Phasendifferenz $\Delta_{\varphi 12}$ als auch auf der der Resonanzfrequenz $f_{r1}$ des Vibrationselements V1 entsprechenden Signalfrequenz des ersten und/oder zweiten Schwingungssignals, nicht aber basierend auf der Resonanzfrequenz $f_{r2}$ des Vibrationselements V2 bzw. der dieser entsprechenden Signalfrequenz des Schwingungssignals s3 ermittelt. Die Meß- und Betriebselektronik kann hierbei ferner auch so eingerichtet sein, daß sie das dem Anregen des Vibrationselemets V2 dienende Treibersignal e2 im zweiten Betriebsmode des Meßsystems nicht bzw. lediglich im ersten Betriebsmode des Meßsystems liefert, mithin das Vibrationselement V2 im zweiten Betriebsmode nicht bzw. lediglich im ersten Betriebsmode vibrieren gelassen ist. Die Aktivierung des ersten bzw. zweiten Betriebsmodes wiederum kann beispielsweise jeweils basierend auf dem Verformungssignal d1 erfolgen, etwa mittels eines wiederkehrend in der Meß- und Betriebselektronik ausgeführten Vergleichs einer (momentanen) Amplitude des Verformungssignals d1 mit einer als Schaltschwelle für die Deaktivierung des ersten und die Aktivierung des zweiten Betriebsmodes dienenden, meßsystemspezifischen ersten Deformationsreferenzwerts, der einen vorgegebenen ersten Deformationsgrad zumindest des Vibrationselements V1 repräsentiert, bzw. mittels eines wiederkehrend in der Meß- und Betriebselektronik ausgeführten Vergleichs vorgenannter Amplitude des Verformungssignals d1 mit einer als Schaltschwelle für die Deaktivierung des zweiten und die Aktivierung des ersten Betriebsmodes dienenden, meßsystemspezifischen zweiten Deformationsreferenzwerts, der einen vorgegebenen zweiten, nämlich im Vergleich zum ersten Deformationsgrad kleineren, Deformationsgrad Vibrationselements V1 repräsentiert. Alternativ oder in Ergänzung kann die Aktivierung des ersten und/oder zweiten Betriebsmodes jeweils unter Verwendung auch des erwähnten ersten Temperatursignals $\theta1$ erfolgen, beispielsweise derart, daß in der Meß- und Betriebselektronik wiederkehrend ein Vergleich einer (momentanen) Amplitude des Temperatursignals $\theta1$ mit einer als Schaltschwelle für die Deaktivierung des ersten und die Aktivierung des zweiten Betriebsmodes dienenden, meßsystemspezifischen ersten Temperaturreferenzwerts ausgeführt wird, der eine für das Vibrationselements V1 vorgegebenen erste Wärmespannung repräsentiert, bzw. in der Meß- und Betriebselektronik wiederkehrend ein Vergleich vorgenannter Amplitude des Temperatursignals $\theta1$ mit einer als Schaltschwelle für die Deaktivierung des zweiten und die Aktivierung des ersten Betriebsmodes dienenden, meßsystemspezifischen zweiten Temperaturreferenzwerts ausgeführt wird, der einen vorgegebenen zweite, nämlich im Vergleich zur ersten Wärmespannung geringere, Wärmespannung im Vibrationselements V1 repräsentiert. Für den Fall, daß die Aktivierung des ersten Betriebsmodes sowohl basierend auf dem Verformungssignal d1 als auch dem Temperatursignal $\theta1$ erfolgt, ist die Meß- und Betriebelektonik in vorteilhafter Weise so eingerichtet, daß nämlicher erster Betriebsmodes auch bereits dann aktiviert wird, wenn ein Erreichen bzw. Überschreiten lediglich des ersten Deformationsreferenzwerts durch das Verformungssignal d1 oder auch nur des ersten Temperaturreferenzwerts durch das Temperatursignal $\theta1$ detektiert ist. Umgekehrt ist für den Fall, daß die Aktivierung des zweiten Betriebsmodes sowohl basierend auf dem Verformungssignal d1 als auch dem Temperatursignal $\theta1$ erfolgt, die Meß- und Betriebelektonik in vorteilhafter Weise so eingerichtet, daß nämlicher zweiter Betriebsmodes erst dann aktiviert wird, wenn ein Erreichen bzw. Unterschreiten sowohl des zweiten Deformationsreferenzwerts durch das Verformungssignal d1 als auch des zweiten Temperaturreferenzwerts durch das Temperatursignal $\theta1$ detektiert ist. In Ergänzung zur vorbeschrieben selektiven Aktivierung/Deaktivierung des ersten bzw. Betriebsmoden basierend auf dem Temperatursignal $\theta1$ kann es ferner, nicht zuletzt für das Erreichen einer hohen Meßgenauigkeit auch bei der Ermittlung der Volumendurchflußrate bzw. des Volumendurchflusses bei relativ hohen, nämlich oberhalb einer, beispielsweise 8 m/s (Meter pro Sekunde) oder mehr betragenden, meßsystemspezifischen kritischen Strömungsgeschwindigkeit liegenden, Strömungsgeschwindigkeiten, durchaus von Vorteil sein, auch dann vom zweiten in den ersten Betriebsmode zu wechseln, mithin den ersten Betriebsmode auch dann zu aktivieren, wenn ein Phasendifferenz-zu-Signalfrequenz-Verhältnis - nämlich ein Verhältnis der momentan gemessenen Phasendifferenz $\Delta\varphi_{12}$ zur der momentanen Resonanzfrequenz $f_{r1}$ entsprechenden Signalfrequenz wenigstens eines der Sensorsignale s1, s2 - einen dafür vorgegebenen, nämliche meßsystemspezifische kritische Strömungsgeschwindigkeit repräsentierenden Referenzwert erreicht oder überschreitet.

Nach einer weiteren Ausgestaltung weist das Meßsystem ferner einen dritten Betriebsmode auf, in dem die Meß- und Betriebselektronik die als gültige Meßwerte X des Meßsystems dienenden Meßwerte $X_V$ ($X_V \rightarrow X$) bzw. $X_v$ ($X_v \rightarrow X$) zwar basierend sowohl auf der Phasendifferenz $\Delta_{\varphi 12}$ als auch auf der der Resonanzfrequenz $f_{r1}$ des Vibrationselements V1 entsprechenden Signalfrequenz zumindest eines der Schwingungssignale s1, s2 ermittelt, im Unterschied zum vorbeschriebene zweiten Betriebsmode gleichzeitig aber auch das Vibrationselement V2 vom Medium kontaktiert ist und währendessen mittels des von der Meß- und Betriebselektronik im dritten Betriebsmode zumindest zeitweise ebenfalls genierten Treibersignals e2 entsprechend aktiv zu Resonanzschwingungen angeregt ist. Die Meß- und Betriebselektronik ist hierbei ferner dafür eingerichtet, basierend sowohl auf der der Resonanzfrequenz $f_{r1}$ entsprechenden Signalfrequenz zumindest eines der während des dritten Betriebsmodes empfangenen Schwingungssignale s1, s2 als auch der der Resonanzfrequenz $f_{r2}$ entsprechenden Signalfrequenz zumindest des während des dritten Betriebsmodes empfangenen Schwingungssignals s3 eine (Selbst-) Überprüfung des Meßsystems durchzuführen, insb.

dahingehend, ob das Meßsystem nach wie vor innerhalb der dafür vorgegeben Spezifikation arbeitet, und/oder ob die vom Meßsystem ausgegebenen Meßwerte X als valide angesehen werden können. Die Überprüfung des Meßsystems kann z.B. durchgeführt werden, indem mittels der Meß- und Betriebselektronik wiederkehrend eine - relative oder absolute - Abweichung beider Resonanzfrequenzen $f_{r1}$, $f_{r2}$ voneinander ermittelt, und hernach mit einem dafür entsprechend vorgegebenen Grenzwert verglichen wird, der eine maximal zulässige bzw. für ein intaktes Meßsystem maximal zu erwartende Abweichung beider Resonanzfrequenzen $f_{r1}$, $f_{r2}$ repräsentiert. Für den Fall, daß nämliche Abweichung den vorgenannten Grenzwert erreicht oder überschreitet kann die Meß- und Betriebselektronik ferner beispielsweise einen Alarm generieren, der signalisiert, daß eine irreversible Beschädigung zumindest eines der beiden Vibrationselemente V1, V2, etwa infolge Abrasion, Korrosion, plastischer Deformierung oder Rißbildung, festgestellt ist. Alternativ oder in Ergänzung ist die Meß- und Betriebselektronik ferner dafür eingerichtet, die vorgenannte Überprüfung des Meßsystems basierend auf den während des dritten Betriebsmodes generierten Treibersignalen e1, e2, durchzuführen, beispielsweise derart, daß die Meß- und Betriebselektronik während des dritten Betriebsmodes für jedes der beiden Treibersignale e1, e2 jeweils eine mittlere elektrische Leistung, nämlich eine mittlere elektrische Leistung $P_{exc1}$ des Treibersignals e1 und eine mittlere elektrische Leistung $P_{exc2}$ des Treibersignals e2, ermittelt und eine - relative oder absolute - Abweichung beider elektrischen Leistungen $P_{exc1}$, $P_{exc2}$ voneinander mit einem dafür entsprechend vorgegebenen Grenzwert vergleicht. Auch hierbei kann der Grenzwert so gesetzt sein, daß ein Erreichen oder Überschreiten desselben eine, ggf. wiederum zu alarmierende irreversible Beschädigung zumindest eines der beiden Vibrationselemente V1, V2 indiziert. Alternativ oder in Ergänzung zur vorbeschrieben Überprüfung des Meßsystems mittels der im dritten Betriebsmode generierten Schwingungs- und/oder Treibersignale können zudem auch die beiden erwähnten Temperatursignale θ1, θ2 zur Überprüfung des Meßsystems verwendet werde, beispielsweise derart, daß für den Fall, daß beide Vibrationselementen V1, V2 nominell vom gleichen Medium kontaktiert sind bzw. sein müßten, bei einer basierend auf beiden Temperatursignalen θ1, θ2 ermittelten unzulässig hohen und/oder unzulässig lang andauernden Abweichung der beiden Temperaturen $\vartheta_1$, $\vartheta2$ voneinander, mittels der Meß- und Betriebselektronik ein Alarm generiert wird, der eine Bildung eines Belags auf zumindest einem der beiden Vibrationselemente V1, V2 signalisiert, und/oder ein Alarm generiert wird, der signalisiert, daß zumindest eines der das Vibrationselement V1 oder der das Vibrationselement V2 bildenden Meßrohre zumindest teilweise verstopft ist.

Zum Steuern der Strömung durch das Vibrationselement V2 bzw. der Massendurchflußrate $m_2$, ggf. auch zwecks eines vorübergehenden Vermeidens jeglicher Strömung durch das Vibrationselement V2 und/oder zwecks des kontrollierten Beförderns des durch Vibrationselement V2 strömende Teilvolumens, beispielsweise im Falle eines hochviskosen Mediums von mehr als 100 mPa·s (Millipascalsekunde) und/oder einer gelegentlich relativ niedrigen Massendurchflußrate $m_1$ von weniger als 50% eines für die Massendurchflußrate $m_1$ vorgegebenen meßsystemspezifischen Maximalwerts und/oder beispielsweise auch um den Strömungsquerschnitt des Vibrationselements V2, mithin dessen Einbaumaße möglichst klein halten zu können, insb. auch so klein, daß im Ergebnis beide Vibrationselemente V1, V2 in ein ansonsten auch in herkömmlichen Meßsystemen mit nur einem einzigen Vibrationselement üblicherweise verwendeten Gehäuse passen, und/oder zum Begrenzen der Massendurchflußrate $m_2$ auf einen dafür vorgegebenen Maximalwert, beispielsweise auch im Falle hoher Massendurchflußraten $m_1$ von mehr als 80% des dafür vorgegebenen meßsystemspezifischen Maximalwerts, umfaßt das Meßsystem gemäß einer weiteren Ausgestaltung ferner ein zum einen an einer der Strömungsöffnungen $O_{ii,1}$, $O_{ii,2}$ zweiter Art und zum anderen an das Vibrationselement V2 angeschlossene, beispielsweise ein elektromagnetisch betätigbares Ventil und/oder eine elektromotorisch betriebene Pumpe aufweisende, Fluidkontrolleinrichtung FC. Die Fluidkontrolleinrichtung FC kann beispielsweise mittels separater, ggf. innerhalb des Gehäuses verteilt angeordneten und mittels entsprechender fluidischer bzw. elektrischer Anschlußleitungen miteinander verbundenen, Einzelkomponenten gebildet oder beispielsweise als ein sämtliche Einzelkomponenten in einem Modul vereinigender Durchfluß-Kontroller ausgebildet sein. Nach einer weiteren Ausgestaltung der Erfindung ist die Fluidkontrolleinrichtung über eine der Anschlußleitungen L21, L22 strömungstechnisch mit einer der Strömungsöffnungen $O_{ii,1}$, $O_{ii,2}$ zweiter Art verbunden und/oder ist die Fluidkontrolleinrichtung mittels einer der Anschlußleitungen L21, L22 strömungstechnisch an das Vibrationselement V2 angeschlossen. Die Fluidkontrolleinrichtung FC bzw. die enthaltenen Ventile und/oder Pumpen können zudem beispielsweise mittels Anschlußdrähten mit der Meß- und Betriebselektronik elektrisch verbunden sein und von dieser im Betrieb des Meßsystem mittels entsprechender elektrischer Steuersignale fc1 direkt angesteuert und mit elektrischer Energie versorgt werden. Alternativ oder in Ergänzung kann die Fluidkontrolleinrichtung FC selbst eine eigene interne Steuerelektronik aufweisen, die eine von der Meß- und Betriebselektronik aus gespeisten eigenen Energieversorgungsschaltung umfaßt, und die von der Meß- und Betriebselektronik aus mittels entsprechender, von einem, beispielsweise binären, Steuersignal fc1 übertragenen Steuerkommandos gestartet bzw. gestoppt und/oder parametriert wird. Nach einer weiteren Ausgestaltung der Erfindung ist die Fluidkontrolleinrichtung oder sind die Meß- und Betriebselektronik und Fluidkontrolleinrichtung FC zusammen dafür eingerichtet, das durch das Vibrationselment V2 strömende Teilvolumen mit einer vorgebbaren Volumendurchflußrate strömen zu lassen bzw. nämliche Volumendurchflußrate auf einen dafür vorgegebenen, beispielsweise einem für die Messung der Resonanzfrequenz $f_{r2}$ des Vibrationselements V2 besonders geeigneten Arbeitspunkt entsprechenden, Konstantwert zu regeln. Dies ermöglicht es zum einen allfällige Ungenauigkeit bei einer Bilanzierung der beiden Massendurchflußraten

$m_1$, $m_2$ grundsätzlich zu minimieren und zum andere kann damit sehr einfach eine für Ermittlung hochgenauer Meßwert $X_v$ und/oder Meßwert $X_V$, mithin für die Messung der Volumendurchflußrate bzw. des Volumdurchflusses, besonders geeignete Massendurchflußrate $m_2$ des durch Vibrationselement V2 strömenden Teilvolumen unabhängig von andern Prozeßparametern, wie etwa einer Viskosität, einer Temperatur, einem Druck und/oder einer Massendurchflußrate des in der Rohrleitung strömenden Mediums eingestellt bzw. nämlichen Prozeßparametern entsprechend angepaßt werden. Alternativ oder in Ergänzung dazu, kann für den oben beschriebenen Fall, daß das Meßsystem zumindest zwei Betriebsmoden für die die Ermittlung der Volumendurchflußrate bzw. des Volumendurchflusses des in der Rohrleitung strömenden Mediums aufweist, die Fluidkontrolleinrichtung FC während des erwähnten zweiten Betriebsmodes deaktiviert ist, derart, daß eine allfällig in der Fluidkontrolleinrichtung vorgesehene Pumpe abgeschaltet und/oder ein allfällig in der Fluidkontrolleinrichtung vorgesehenes Ventil geschlossen ist, bzw. daß die Fluidkontrolleinrichtung FC lediglich während des erwähnten ersten Betriebsmodes aktiviert ist, derart, daß eine allfällig in der Fluidkontrolleinrichtung vorgesehene Pumpe angeschaltet und/oder ein allfällig in der Fluidkontrolleinrichtung vorgesehenes Ventil zumindest teilweise geöffnet ist.

In der Fig. 9 ist einer weitere Ausgestaltungvariante für ein nicht erfindungsgemäßes Meßsystem schematisch dargestellt. Bei dem hier gezeigte Meßsystem ist das zweite Vibrationselement V2, im Unterschied etwa auch zu den in den Fig. 3, 4 oder 5 jeweils gezeigten Ausgestaltungvarianten, dafür eingerichtet, in Medium eingetaucht bzw. von Medium angeströmt und währenddessen wiederum, nämlich gleichermaßen wie bei den vorbeschriebenen Ausgestaltungsvarianten mit durchströmtem Vibrationselement V2, vom Schwingungserreger E2 aktiv angeregt, vibrieren gelassen zu werden. Das Vibrationselement V2 kann zur Realisierung dieser Ausgestaltungvariante beispielsweise ein mittels des Schwingungserregers zu Schwingungen in einem Glockenmode aktiv angeregter Hohlkörper, etwa gemäß EP-A 564 682, sein. Ferner kann das Vibrationselement V2 aber auch mittels wenigstens eines, beispielsweise paddelförmigen und/oder innen hohlen, Schwingstabs gebildet sein, der im Betrieb zu Biegeschwingungen aktiv angeregt ist. Demnach kann das Vibrationselement V2 beispielsweise auch mittels zweier mechanischer gekoppelter Schwingstäbe gebildet und dafür eingerichtet sein, im Betrieb mittels des Schwingungserrgers E2 aktiv zu Resonanzschwingungen nach Art einer Stimmgabel angeregt zu werden. Das Vibrationselement V2 kann also auch einem solchen Vibrationselement entsprechen, wie u.a. auch in der US-B 68 45 663 gezeigt ist. Darüberhinaus kann das Vibrationselement V2 hierbei auch, wie in Fig. 9 schematisch dargestellt, von einem - ansonsten durchaus auch eigenständig betreibbaren - vibronischen (Dichte-) Meßgerät bereitgestellt sein. Demnach kann das Vibrationselement V2 also beispielsweise auch eine Teilkomponente eines solchen vibronischen Meßgeräts sein, wie es von der Fa. Endress+Hauser GmbH & Co. KG hergestellten und unter der Bezeichnung Liquiphant M FTL50 (http://www.us.endress.com/#product/FTL50), nicht zuletzt auch zusammen mit einem Dichterechner FML621 (http://www.us.endress.com/#product/FML621), angeboten wird. Das Vibrationselement V2 ist bei der in Fig. 9 gezeigten Ausgestaltungsvariante außen am Gehäuse H, nämlich außerhalb von dessen das Vibrationselement V1 aufnehmenden Lumens, gehaltert bzw. auf der im Betrieb vom Medium kontaktierten - hier lediglich eine oder mehrere Strömungsöffnungen erster Art aufweisenden - Außenseite des Gehäuses H angeordnet. Das Vibrationselement V2 kann hierbei mittels eines ein entsprechendes Außengewinde tragenden Einschraubstutzen in eine in der Nähe eines der Flansche F1, F2 eingelassenen, mit einem zum Außengewinde komplementären Innengewinde versehene Einbauöffnung eingeschraubt sein. Ein Vorteil der in Fig. 9 beschriebenen Ausgestaltungsvariante ist u.a. darin zusehen, daß es als zusätzliche Einbaumaßnahme lediglich der - in herkömmlichen Coriolis-Massedurchfluß-Meßgeräten zwar nicht notwendigerweise vorhandenen, gleichwohl ohne weiteres, nicht zuletzt auch passend für vorgenannte vibronische (Dichte-) Meßgeräte und/oder nachträglich, herstellbaren - Einbauöffnung mit Innengewinde bedarf, im übrigen aber auf Strömungsöffnungen zweiter Art verzichtet werden kann.

**Patentansprüche**

1.   Meßsystem zum Ermitteln eines Volumendurchflusses, v, nämlich eines während eines Meßintervalls insgesamt geflossenen Volumens, und/oder einer Volumendurchflußrate, v, eines in einer Rohrleitung strömenden Mediums, insb. einer Flüssigkeit oder eines Gases, welches Meßsystem umfaßt:

- ein ein Lumen aufweisendes, insb. als mittels wenigstens eines geraden und/oder in den Verlauf der Rohrleitung einsetzbaren Meßrohrs gebildetes, erstes Vibrationselement (V1), das dafür eingerichtet ist, in nämlichem Lumen einen mit einer ersten Massendurchflußrate, $m_1$, strömendem Anteil des Mediums zu führen und währenddessen, insb. mit einer Resonanzfrequenz, vibrieren gelassen zu werden;
- wenigstens einen ersten Schwingungserreger (E1) zum Anregen von Vibrationen des ersten Vibrationselements (V1), derart, daß nämliches Vibrationselement (V1) zumindest anteilig Resonanzschwingungen, nämlich mechanische Schwingungen mit einer, insb. von einer Dichte des Mediums abhängigen, ersten Resonanzfrequenz, $f_{r1}$, ausführt;
- einen ersten Schwingungssensor (S1) zum Erfassen von Vibrationen, insb. mittels des ersten Schwingungserregers angeregten Resonanzschwingungen, des ersten Vibrationselements (V1), welcher erster Schwingungssensor (S1) dafür eingerichtet ist, ein von Vibrationen des ersten Vibrationselements abhängiges erstes Schwingungssignal (s1) zu generieren, das eine der ersten Resonanzfrequenz, $f_{r1}$, entsprechende Signalfrequenz aufweist;

- wenigstens einen vom ersten Schwingungssensor (S1) beabstandeten zweiten Schwingungssensor (S2) zum Erfassen von Vibrationen des ersten Vibrationselements (V1), welcher zweiter Schwingungssensor (S2) dafür eingerichtet ist, ein von Vibrationen des ersten Vibrationselement (V1) abhängiges zweites Schwingungssignal (s2) zu generieren, derart, daß nämliches zweites Schwingungssignal (s2) eine zur Signalfrequenz der Signalkomponente des ersten Schwingungssignals (s1) gleiche, mithin der ersten Resonanzfrequenz, $f_{r1}$, entsprechende Signalfrequenz sowie relativ zum ersten Schwingungssignal (s1) eine von der ersten Massendurchflußrate, $m_1$, abhängige Phasendifferenz, $\Delta\varphi_{12}$, aufweist;

- ein mittels wenigstens eines zweites Vibrationselement (V2), das dafür eingerichtet ist, zumindest zeitweise von einem Anteil des Mediums kontaktiert und währenddessen, insb. mit einer Resonanzfrequenz, vibrieren gelassen zu werden;

- wenigstens einen zweiten Schwingungserreger (E2) zum Anregen von Vibrationen des zweiten Vibrationselements (V2), derart, daß nämliches Vibrationselement (V2) zumindest anteilig Resonanzschwingungen, nämlich mechanische Schwingungen mit einer, insb. von einer Dichte des Mediums abhängigen und/oder um mehr als 10 Hz von der ersten Resonanzfrequenz, $f_{r1}$, abweichenden, zweiten Resonanzfrequenz, $f_{r2}$, ausführt;

- wenigstens einen dritten Schwingungssensor (S3) zum Erfassen von Vibrationen des zweiten Vibrationselements (V2), welcher Schwingungssensor (S3) dafür eingerichtet ist, ein von Vibrationen des zweiten Vibrationselements (V2) abhängiges drittes Schwingungssignal (s3) zu generieren, das eine der zweiten Resonanzfrequenz, $f_{r2}$, entsprechende Signalfrequenz aufweist;

- ein Gehäuse (H) mit einem an ein erstes Leitungssegment (L11) der Rohrleitung anschließbaren ersten Gehäusende (H1) und mit einem an ein zweites Leitungssegment (L21) der Rohrleitung anschließbaren zweiten Gehäuseende (H2);

- sowie eine, insb. mittels zweier miteinander kommunizierenden Elektronikmodule gebildete, Meß- und Betriebselektronik (ME);

- wobei das erste Vibrationselement (V1) mittels wenigstens zweier, insb. gerader und/oder strömungstechnisch zueinander parallel geschalteter und/oder baugleicher, Meßrohre (11, 12) gebildet ist;

- wobei das zweite Vibrationselement (V2) mittels wenigstens zweier gekrümmter, insb. strömungstechnisch zueinander parallel geschalteter, Meßrohre (21, 22) gebildet ist, insb. derart, daß jedes der wenigstens zwei Meßrohre strömungstechnisch in einem Nebenschluß zum ersten Vibrationselement (V1) geschaltet ist;

- wobei sowohl das erste Vibrationselement als auch das zweite Vibrationselement innerhalb desselben Lumens des Gehäuses (H) untergebracht sind;

- wobei die Meß- und Betriebselektronik (ME) dafür eingerichtet ist, ein erstes Treibersignal (e1) für den ersten Schwingungserreger (E1), das eine der ersten Resonanzfrequenz, $f_{r1}$, entsprechende Signalfrequenz aufweist, sowie, insb. zumindest zeitweise und/oder simultan zum ersten Treibersignal (e1), ein zweites Treibersignal (e2) für den zweiten Schwingungserreger, das eine der zweiten Resonanzfrequenz, $f_{r2}$, entsprechende Signalfrequenz aufweist, zu generieren, derart, daß nämliche Signalfrequenz des zweiten Treibersignals (e2) um mehr als 10 Hz von der Signalfrequenz des ersten Treibersignals (e1) abweicht;

- und wobei die Meß- und Betriebselektronik (ME) dafür eingerichtet ist, mittels des ersten, zweiten und dritten Schwingungssignals (s1, s2, s3), nämlich basierend auf der zwischen dem ersten und zweiten Schwingungssignal existierenden Phasendifferenz, $\Delta\varphi_{12}$, und basierend auf der Signalfrequenz des dritten Schwingungssignals (s3), einen die Volumendurchflußrate repräsentierenden Meßwert ($X_v$) und/oder einen den Volumendurchfluß repräsentierenden Meßwert ($X_V$) zu generieren.

2. Meßsystem nach Anspruch 1,
wobei das zweite Vibrationselement (V2) ein Lumen zum Führen von strömendem Medium aufweist und dafür eingerichtet ist, in dessen Lumen einen mit einer zweiten Massendurchflußrate, $m_2$, strömenden Anteil des Mediums zu führen und währenddessen vibrierengelassen zu werden, insb. derart, daß die zweite Massendurchflußrate, mit der der in Lumen des zweiten Vibrationselements (V2) geführte Anteil des Mediums strömt, kleiner ist als die erste Massendurchflußrate, mit der der in Lumen des erste Vibrationselements (V1) geführte Anteil des Mediums strömt.

3. Meßsystem nach dem vorherigen Anspruch , weiters umfassend: wenigstens einen vom dritten Schwingungssensor (S3) beabstandeten vierten Schwingungssensor (S4) zum Erfassen von Vibrationen des zweiten Vibrationselements (V2), welcher vierte Schwingungssensor (S4) dafür eingerichtet ist, ein von Vibrationen des zweiten Vibrationselements (V2) abhängiges viertes Schwingungssignal (s4) zu generieren, derart, daß nämliches viertes Schwingungssignal (s4) eine zur Signalfrequenz des dritten Schwingungssignals (s3) gleiche, mithin der zweiten Resonanzfre-

quenz, $f_{r2}$, entsprechende Signalfrequenz sowie relativ zum dritten Schwingungssignal (s3) eine von der zweiten Massendurchflußrate, $m_2$, abhängige Phasendifferenz, $\Delta\varphi_{34}$, aufweist.

4. Meßsystem nach Anspruch 3,

   - wobei die Meß- und Betriebselektronik (ME) dafür eingerichtet ist, den die Volumendurchflußrate repräsentierenden Meßwert ($X_v$), auch mittels des vierten Schwingungssignals (s4), nämlich basierend auf der zwischen dem dritten und vierten Schwingungssignal (s3, s4) existierenden Phasendifferenz, $\Delta\varphi_{34}$, zu generieren; und/oder
   - wobei die Meß- und Betriebselektronik dafür eingerichtet ist, den die Volumendurchfluß repräsentierenden Meßwert (Xv), auch mittels des vierten Schwingungssignals, nämlich basierend auf der zwischen dem dritten und vierten Schwingungssignal (s3, s4) existierenden Phasendifferenz, $\Delta\varphi_{34}$, zu generieren; und/oder
   - wobei die Meß- und Betriebselektronik (ME) dafür eingerichtet ist, mittels des dritten und vierten Schwingungssignals (s3, s4), nämlich basierend auf der zwischen dem dritten und vierten Schwingungssignal existierenden Phasendifferenz, $\Delta\varphi_{34}$, einen die zweite Massendurchflußrate, $m_2$, repräsentierenden Meßwert ($X_{m2}$) zu generieren.

5. Meßsystem nach Anspruch 2, 3 oder 4, weiters umfassend: eine, insb. mittels eines elektromagnetisch betätigbaren und/oder von der Meß- und Betriebselektronik (ME) angesteuerten Ventils und/oder mittels einer von der Meß- und Betriebselektronik angesteuerten Pumpe gebildete, Fluidkontrolleinrichtung (FC) zum Steuern der zweiten Massendurchflußrate, $m_2$.

6. Meßsystem nach Anspruch 1, 2, 3 oder 5,

   - wobei das erste Vibrationselement (V1) einen Strömungsquerschnitt aufweist der größer als ein Strömungsquerschnitt ist, den das zweite Vibrationselement (V2) aufweist; und/oder
   - wobei das zweite Vibrationselement (V2) einen Strömungswiderstand aufweist, der größer ist als ein Strömungswiderstand, den das erste Vibrationselement (V1) aufweist.

7. Meßsystem nach einem der vorherigen Ansprüche,

   - wobei die Meß- und Betriebselektronik (ME) dafür eingerichtet ist, mittels des dritten Schwingungssignals (s3), nämlich basierend auf der der zweiten Resonanzfrequenz, $f_{r2}$, entsprechenden Signalfrequenz des dritten Schwingungssignals, einen eine Dichte,p, des Mediums repräsentierenden Meßwert ($X_\rho$) zu generieren; und/oder
   - wobei die Meß- und Betriebselektronik (ME) dafür eingerichtet ist, mittels des ersten und zweiten Schwingungssignals (s1, s2), nämlich basierend auf der zwischen dem ersten Schwingungssignal (s1) und dem zweiten Schwingungssignal (s2) existierenden Phasendifferenz, $\Delta\varphi_{12}$, einen die erste Massendurchflußrate, $m_1$, repräsentierenden Meßwert ($X_m$; $X_{m1}$) zu generieren; und/oder
   - wobei die Meß- und Betriebselektronik (ME) mittels zweier miteinander kommunizierenden Elektronikmodule ($ME_1$, $ME_2$) gebildet ist, von denen jedes in einem von zwei oder mehr separaten Elektronikgehäusen (HE, HE') untergebracht ist; und/oder
   - weiters umfassend: einen, insb. das erste Vibrationselement auf einer dessen Lumen abgewandter Seite kontaktierenden, ersten Temperatursensor (T1) zum Erfassen einer Temperatur, $\vartheta_1$, des ersten Vibrationselements (V1), der dafür eingerichtet ist, ein von nämlicher Temperatur des ersten Vibrationselements abhängiges erstes Temperatursignal ($\theta_1$) zu generieren, sowie einen, insb. das zweite Vibrationselement auf einer nicht vom Medium kontaktierbaren Seite plazierten, zweiten Temperatursensor (T2) zum Erfassen einer Temperatur, $\vartheta_2$, des zweiten Vibrationselements (V2), der dafür eingerichtet ist, ein von nämlicher Temperatur des zweiten Vibrationselements abhängiges zweites Temperatursignal ($\theta_2$) zu generieren,
   - wobei die Meß- und Betriebselektronik, dafür eingerichtet ist, den die Volumendurchflußrate repräsentierenden Meßwert mittels des ersten Temperatursignals ($\theta_1$) und/oder mittels des zweiten Temperatursignals ($\theta_2$) zu generieren; und/oder
   - wobei die Meß- und Betriebselektronik, dafür eingerichtet ist, den den Volumendurchfluß repräsentierenden Meßwert mittels des ersten Temperatursignals ($\theta_1$) und/oder mittels des zweiten Temperatursignals ($\theta_2$) zu generieren.

8. Meßsystem nach dem vorherigen Anspruch, wobei die Meß- und Betriebselektronik dafür eingerichtet ist, das erste und zweite Treibersignal (e1, e2) simultan zu generieren, derart, daß die der zweiten Resonanzfrequenz, $f_{r2}$, ent-

sprechende Signalfrequenz des zweiten Treibersignals (e2) kleiner ist als die der ersten Resonanzfrequenz, $f_{r1}$, entsprechende Signalfrequenz des ersten Treibersignals (e1), insb. derart, daß nämliche Signalfrequenz des zweiten Treibersignals (e2) weniger als 90% der Signalfrequenz des ersten Treibersignals (e1) entspricht.

9.  Meßsystem nach einem der vorherigen Ansprüche,

    - wobei mittels des zweiten Vibrationselements (V2) ein das Lumen des ersten Vibrationselements (V1) strömungstechnisch überbrückender Bypass gebildet ist.

10. Meßsystem nach einem der Ansprüche 1 bis 9,

    - wobei das zweite Vibrationselement (V2) an die Rohrleitung angeschlossen ist, derart, daß dessen Lumen mit einem Lumen der Rohrleitung kommuniziert; und/oder
    - wobei das zweite Vibrationselement (V2) mittels einer, insb. flexiblen und/oder gebogenen, ersten Anschlußleitung (L21) und mittels einer, insb. flexiblen und/oder gebogenen, zweiten Anschlußleitung (L22) an die Rohrleitung angeschlossen ist.

11. Meßsystem nach einem der vorherigen Ansprüche,

    - wobei die Resonanzfrequenz, $f_{r1}$, mit der das erste Vibrationselement (V1) vibrieren gelassen ist, von der Resonanzfrequenz, $f_{r2}$, mit der das zweite Vibrationselement (V2) vibrieren gelassen ist, abweicht; und/oder
    - wobei die zweite Resonanzfrequenz, kleiner ist, als die erste Resonanzfrequenz, insb. derart, daß die zweite Resonanzfrequenz weniger als 90% der ersten Resonanzfrequenz entspricht; und/oder
    - wobei das erste und zweite Vibrationselement (V1, V2) voneinander mechanisch entkoppelt sind, derart, daß jedes der beiden Vibrationselemente unabhängig vom jeweils anderen Vibrationselement vibrieren kann, und/oder derart, daß eine niedrigste mechanische Eigenfrequenz des ersten Vibrationselements (V1) von einer niedrigsten mechanischen Eigenfrequenz des zweiten Vibrationselements (V2) verschieden ist, insb. derart, daß nämliche niedrigste mechanische Eigenfrequenz des ersten Vibrationselements kleiner ist als nämliche niedrigste mechanischen Eigenfrequenz des zweiten Vibrationselements; und/oder
    wobei das erste Vibrationselement (V1) an die Rohrleitung anschließbar, insb. in deren Verlauf einsetzbar, ist, derart, daß das Lumen nämlichen Vibrationselements mit einem Lumen der Rohrleitung kommuniziert; und/oder
    - wobei das erste und zweite Vibrationselement (V1, V2) dafür eingerichtet sind, gleichzeitig jeweils von Medium durchströmt zu werden.

12. Meßsystem nach einem der vorherigen Ansprüche, wobei das zweite Vibrationselement (V2) am Gehäuse (H) gehaltert ist.

13. Meßsystem nach einem der Ansprüche 1 bis 12,

    - wobei das erste Gehäuseende (H1) wenigstens eine erste Strömungsöffnung ($O_{i,11}$) erster Art, nämlich eine erste mit dem ersten Vibrationselement (V1) kommunizierende Strömungsöffnung, aufweist,
    - wobei das zweite Gehäuseende (H2) wenigstens eine erste Strömungsöffnung ($O_{i,21}$) erster Art, nämlich eine erste mit dem ersten Vibrationselement (V1) kommunizierende Strömungsöffnung, aufweist,
    - wobei das erste Gehäuseende (H1) wenigstens eine zweite Strömungsöffnung ($O_{i,12}$) erster Art, nämlich eine zweite mit dem ersten Vibrationselement (V1) kommunizierende Strömungsöffnung, aufweist,
    - wobei das zweite Gehäuseende (H2) wenigstens eine zweite Strömungsöffnung ($O_{i,22}$) erster Art, nämlich eine zweite mit dem ersten Vibrationselement (V1) kommunizierende Strömungsöffnung, aufweist,
    - und wobei das erste Vibrationselement (V1) mittels eines ersten Meßrohrs (11), das ein in die erste Strömungsöffnung ($O_{i,11}$) erster Art des ersten Gehäuseendes (H1) mündendes erstes Rohrende sowie ein in die erste Strömungsöffnung ($O_{i,21}$) erster Art des zweiten Gehäuseendes (H2) mündendes zweites Rohrende aufweist, sowie mittels eines, insb. zum ersten Meßrohr (11) baugleichen, zweiten Meßrohrs (21), das ein in die zweite Strömungsöffnung ($O_{i,12}$) erster Art des ersten Gehäuseendes (H1) mündendes erstes Rohrende sowie ein in die zweite Strömungsöffnung ($O_{i,22}$) erster Art des zweiten Gehäuseendes (H2) mündendes zweites Rohrende aufweist, gebildet ist.

14. Meßsystem nach Anspruch 13,

    - wobei das erste Gehäuseende (H1) eine Strömungsöffnung ($O_{ii,11}$) zweiter Art, nämlich eine mit dem zweiten Vibrationselement (V2) kommunizierende Strömungsöffnung, aufweist, und
- wobei das zweite Gehäuseende (H2) eine Strömungsöffnung ($O_{ii,21}$) zweiter Art, nämlich eine mit dem zweiten Vibrationselement (V2) kommunizierende Strömungsöffnung, aufweist.

**15.** Meßsystem nach einem der Ansprüche 13 bis 14, wobei das erste Gehäuseende (H1) eine erste Strömungsöffnung ($O_{ii,11}$) zweiter Art, nämlich eine mit dem zweiten Vibrationselement (V2) kommunizierende Strömungsöffnung, sowie eine zweite Strömungsöffnung ($O_{ii,21}$) zweiter Art, nämlich eine gleichfalls mit dem zweiten Vibrationselement (V2) kommunizierende Strömungsöffnung, aufweist.

**Claims**

**1.** Measuring system designed to determine a volume flow, v, particularly of a total flow during a measuring interval and/or of a volume flow rate, v, of a medium flowing through a pipe, particularly a liquid or a gas, said measuring system comprising:

- a first vibration element (V1) having an interior channel, wherein said element is particularly formed by means of at least a measuring tube that is straight and/or can be inserted in the course of the pipe, wherein said element is designed to conduct - in the interior channel - a part of the medium flowing at a first mass flow rate, $m_1$, and to be allowed to vibrate during this time, particularly at a resonance frequency;
- at least a first vibration exciter (E1) designed to excite vibrations of the first vibration element (V1) in such a way that said vibration element (V1) performs, at least in part, resonance vibrations, specifically mechanical vibrations at a first resonance frequency, $f_{r1}$, particularly dependent on a density of the medium;
- a first vibration sensor (S1) designed to measure vibrations - particularly resonance vibrations excited by means of the first vibration exciter - of the first vibration element (V1), wherein said first vibration sensor (S1) is designed to generate a first vibration signal (s1) that depends on the vibrations of the first vibration element, wherein said signal has a frequency corresponding to the first resonance frequency, $f_{r1}$;
- at least a second vibration sensor (S2), which is spaced at a distance from the first vibration sensor (S1) and which is designed to measure vibrations of the first vibration element (V1), wherein said second vibration sensor (S2) is designed to generate a second vibration signal (s2) that depends on the vibrations of the first vibration element (V1), in such a way that said second vibration signal (s2) has a signal frequency equal to the signal frequency of the signal component of the first vibration signal (s1), and therefore corresponding to the first resonance frequency, $f_{r1}$, as well as a phase difference, $\Delta_{\varphi12}$, in relation to the first vibration signal (s1), that depends on the first mass flow rate, $m_1$;
- at least a second vibration element (V2), which is designed to be brought into contact at least temporarily with a part of the medium and to be allowed to vibrate during this time, particularly at a resonance frequency;
- at least a second vibration exciter (E2) designed to excite vibrations of the second vibration element (V2), in such a way that said vibration element (V2) performs, at least in part, resonance vibrations, specifically mechanical vibrations at a second resonance frequency, $f_{r2}$, that depends particularly on a density of the medium and/or deviates by more than 10 Hz from the first resonance frequency, $f_{r1}$;
- at least a third vibration sensor (S3) designed to measure vibrations of the second vibration element (V2), wherein said vibration sensor (S3) is designed to generate a third vibration signal (s3) that depends on the vibrations of the second vibration element (V2) and which has a signal frequency corresponding to the second resonance frequency, $f_{r2}$;
- a housing (H) with a first housing end (H1) that can be connected to a first segment (L11) of the pipe and with a second housing end (H2) that can be connected to a second segment (L21) of the pipe;
- as well as a measuring and operating electronics unit (ME) particularly formed by means of two electronic modules that communicate with one another;
- wherein the first vibration element (V1) is formed by means of at least two measuring tubes (11, 12), particularly straight and/or mounted in parallel in relation to one another in terms of flow, and/or identical in design;
- wherein the second vibration element (V2) is formed by means of at least two curved measuring tubes (21, 22), particularly mounted in parallel in relation to one another in terms of flow, particularly in such a way that each of the at least two measuring tubes is mounted, in terms of flow, in a shunt in relation to the first vibration element (V1);
- wherein the first vibration element and the second vibration element are both accommodated inside the same interior channel of the housing (H);
- wherein the measuring and operating electronics unit (ME) is designed to generate a first driver signal (e1) for the first vibration exciter (E1), wherein said signal has a frequency corresponding to the first resonance

frequency, $f_{r1}$, and to generate, at least temporarily and/or simultaneously with the first driver signal (e1), a second driver signal (e2) for the second vibration exciter (E2), wherein said signal has a frequency corresponding to the second resonance frequency, $f_{r2}$, in such a way that the signal frequency of the second driver signal (e2) deviates by more than 10 Hz from the signal frequency of the first driver signal (e1);

- and wherein the measuring and operating electronics unit (ME) is designed to generate a measured value ($X_v$) representing the volume flow rate and/or a measured value ($X_V$) representing the volume flow using the first, the second and the third vibration signal (s1, s2, s3), specifically based on the phase difference, $\Delta_{\varphi12}$, that exists between the first and the second vibration signal and based on the signal frequency of the third vibration signal (s3).

2. Measuring system as claimed in Claim 1,
wherein the second vibration element (V2) has an interior channel designed to conduct flowing medium, and is designed to conduct - in its interior channel - a part of medium flowing at a second mass flow rate, $m_2$, and to be allowed to vibrate during this time, particularly in such a way that the second mass flow rate - at which the part of the medium conducted through the interior channel of the second vibration element (V2) flows - is less than the first mass flow rate at which the part of the medium conducted through the interior channel of the first vibration element (V1) flows.

3. Measuring system as claimed in the previous claim, further comprising: at least a fourth vibration sensor (S4) spaced at a distance from the third vibration sensor (S3) and designed to measure vibrations of the second vibration element (V2), wherein said fourth vibration sensor (S4) is designed to generate a fourth vibration signal (s4) that depends on vibrations of the second vibration element (V2), in such a way that said fourth vibration signal (s4) has a signal frequency equal to the signal frequency of the third vibration signal (s3), and therefore corresponding to the second resonance frequency, $f_{r2}$, as well as a phase difference, $\Delta_{\varphi34}$, in relation to the third vibration signal (s3), which depends on the second mass flow rate, $m_2$.

4. Measuring system as claimed in Claim 3,

- wherein the measuring and operating electronics unit (ME) is designed to generate the measured value ($X_v$) representing the volume flow rate, also using the fourth vibration signal (s4), specifically based on the phase difference, $\Delta_{\varphi34}$, existing between the third and the fourth vibration signal (s3, s4); and/or
- wherein the measuring and operating electronics unit (ME) is designed to generate the measured value ($X_v$) representing the volume flow also using the fourth vibration signal (s4), specifically based on the phase difference, $\Delta_{\varphi34}$, existing between the third and the fourth vibration signal (s3, s4); and/or
- wherein the measuring and operating electronics unit (ME) is designed to generate a measured value ($X_{m2}$) representing the second mass flow rate, $m_2$, using the third and the fourth vibration signal (s3, s4), specifically based on the phase difference, $\Delta_{\varphi34}$, existing between the third and the fourth vibration signal.

5. Measuring system as claimed in Claim 2, 3 or 4, further comprising: a fluid control unit (FC) particularly formed by a valve that can be actuated electromagnetically and/or is controlled by the measuring and operating electronics unit (ME) and/or by a pump controlled by the measuring and operating electronics unit, wherein said unit is designed to control the second mass flow rate, $m_2$.

6. Measuring system as claimed in Claim 1, 2, 3 or 5,

- wherein the first vibration element (V1) has a flow cross-section that is greater than a flow cross-section that the second vibration element (V2) has; and/or
- wherein the second vibration element (V2) has a flow resistance which is greater than a flow resistance that the first vibration element (V1) has.

7. Measuring system as claimed in one of the previous claims,

- wherein the measuring and operating electronics unit (ME) is designed to generate a measured value ($X_\rho$) representing a density, $\rho$, of the medium using the third vibration signal (s3), particularly based on the signal frequency of the third vibration signal corresponding to the second resonance frequency, $f_{r2}$; and/or
- wherein the measuring and operating electronics unit (ME) is designed to generate a measured value ($X_m$; $X_{m1}$) representing the first mass flow rate, $m_1$ using the first and the second vibration signal (s1, s2), particularly based on the phase difference, $\Delta_{\varphi12}$ existing between the first vibration signal (s1) and the second vibration signal (s2); and/or

- wherein the measuring and operating electronics unit (ME) is formed by means of two electronic modules (ME$_1$, ME$_2$) that communicate with one another, wherein each of the modules is accommodated in two or more separate electronic housings (HE, HE'); and/or

- further comprising: a first temperature sensor (T1) particularly in contact with the first vibration element on a side facing away from its interior channel, wherein said sensor is designed to measure a temperature, θ1, of the first vibration element (V1), which is designed to generate a first temperature signal (θ1) that depends on said temperature of the first vibration element, as well as a second temperature sensor (T2) in contact with the second vibration element on a side that cannot be contacted by the medium, wherein said sensor is designed to measure a temperature, θ2, of the second vibration element (V2), which is designed to generate a second temperature signal (θ2) that depends on said temperature of the second vibration element,

- wherein the measuring and operating electronics unit is designed to generate the measured value representing the volume flow rate by means of the first temperature signal (θ1) and/or by means of the second temperature signal (θ2); and/or

- wherein the measuring and operating electronics unit is designed to generate the measured value representing the volume flow by means of the first temperature signal (θ1) and/or by means of the second temperature signal (θ2).

8. Measuring system as claimed in the previous claim, wherein the measuring and operating electronics unit is designed to simultaneously generate the first and the second driver signal (e1, e2) in such a way that the signal frequency of the second driver signal (e2) corresponding to the second resonance frequency, f$_{r2}$, is less than the signal frequency of the first driver signal (e1) corresponding to the first resonance frequency, f$_{r1}$, particularly in such a way that said signal frequency of the second driver signal (e2) corresponds to less than 90 % of the signal frequency of the first driver signal (e1).

9. Measuring system as claimed in one of the previous claims,

- wherein a bypass bridging the interior channel of the first vibration element (V1) in terms of flow is formed by means of the second vibration element (V2).

10. Measuring system as claimed in one of the Claims 1 to 9,

- wherein the second vibration element (V2) is connected to the pipe in such a way that its interior channel communicates with an interior channel of the pipe; and/or

- wherein the second vibration element (V2) is connected to the pipe by means of a first connection pipe (L21), particularly flexible and/or curved, and by means of a second connection pipe (L22), particularly flexible and/or curved.

11. Measuring system as claimed in one of the previous claims,

- wherein the resonance frequency, f$_{r1}$, at which the first vibration element (V1) is allowed to vibrate, is different from the resonance frequency, f$_{r2}$, at which the second vibration element (V2) is allowed to vibrate; and/or

- wherein the second resonance frequency is less than the first resonance frequency, particularly in such a way that the second resonance frequency corresponds to less than 90 % of the first resonance frequency; and/or

- wherein the first and the second vibration element (V1, V2) are mechanically decoupled from one another in such a way that each of the two vibration elements can vibrate independently of the other respective vibration element, and/or in such a way that a lowest mechanical natural frequency of the first vibration element (V1) is different from a lowest mechanical natural frequency of the second vibration element (V2), particularly in such a way that said lowest mechanical natural frequency of the first vibration element is less than said lowest mechanical natural frequency of the second vibration element; and/or

wherein the first vibration element (V1) can be connected to the pipe, particularly can be connected in the course of the pipe, in such a way that the interior channel of said vibration element communicates with an interior channel of the pipe; and/or

- wherein the first and the second vibration element (V1, V2) are designed to have medium flow through them simultaneously.

12. Measuring system as claimed in one of the previous claims, wherein the second vibration element (V2) is maintained on the housing (H).

**13.** Measuring system as claimed in one of the Claims 1 to 12,

- wherein the first housing end (H1) comprises at least a first flow opening ($O_{i,11}$) of a first type, particularly a first flow opening that communicates with the first vibration element (V1),
- wherein the second housing end (H2) comprises at least a first flow opening ($0_{i,21}$) of a first type, particularly a first flow opening that communicates with the first vibration element (V1),
- wherein the first housing end (H1) comprises at least a second flow opening ($O_{i,12}$) of a first type, particularly a second flow opening that communicates with the first vibration element (V1),
- wherein the second housing end (H2) comprises at least a second flow opening ($O_{i,22}$) of a first type, particularly a second flow opening that communicates with the first vibration element (V1),
- and wherein the first vibration element (V1) is formed by means of a first measuring tube (11), which has a first tube end entering into the first flow opening ($O_{i,11}$) of a first type of the first housing end (H1) as well as a second tube end entering into the first flow opening ($O_{i,21}$) of a first type of the second housing end (H2), as well as by means of a second measuring tube (21) - which is particularly identical in design to the first measuring tube (11) - which has a first tube end entering into the second flow opening ($O_{i,12}$) of a first type of the first housing end (H1) as well as a second tube end entering into the second flow opening ($O_{i,22}$) of a first type of the second housing end (H2).

**14.** Measuring system as claimed in Claim 13,

- wherein the first housing end (H1) has a flow opening ($O_{ii,11}$) of a second type, particularly a flow opening that communicates with the second vibration element (V2), and
- wherein the second housing end (H2) has a flow opening ($O_{ii,21}$) of a second type, particularly a flow opening that communicates with the second vibration element (V2).

**15.** Measuring system as claimed in one of the Claims 13 to 14, wherein the first housing end (H1) comprises a first flow opening ($O_{ii,11}$) of a second type, particularly a flow opening that communicates with the second vibration element (V2), as well as a second flow opening ($O_{ii,21}$) of a second type, particularly a flow opening that also communicates with the second vibration element (V2).

**Revendications**

**1.** Système de mesure destiné à la détermination d'un débit volumique, v, notamment d'un débit total pendant un intervalle de temps et/ou d'une débit volumétrique, v, d'un produit s'écoulant dans une conduite, notamment un liquide ou un gaz, lequel système de mesure comprend :

- un premier élément de vibration (V1) présentant un canal intérieur, lequel élément est notamment formé au moyen d'au moins un tube de mesure droit et/ou pouvant être inséré dans le tracé de la conduite, lequel élément est conçu pour guider dans le canal intérieur une partie du produit s'écoulant à un premier débit massique, $m_1$, et pour être amené à vibrer pendant ce temps, notamment à une fréquence de résonance ;
- au moins un premier excitateur de vibrations (E1) destiné à exciter en vibrations le premier élément de vibration (V1), de telle sorte que ledit élément de vibration (V1) exécute au moins en partie des vibrations de résonance, à savoir des vibrations mécaniques avec une première fréquence de résonance, $f_{r1}$, dépendant notamment d'une densité du produit ;
- un premier capteur de vibrations (S1) destiné à mesurer les vibrations - notamment les vibrations de résonance excitées au moyen du premier excitateur de vibrations - du premier élément de vibration (V1), lequel premier capteur de vibrations (S1) est conçu pour générer un premier signal de vibration (s1) dépendant des vibrations du premier élément de vibration, lequel signal présente une fréquence correspondant à la première fréquence de résonance, $f_{r1}$ ;
- au moins un deuxième capteur de vibrations (S2), lequel est espacé du premier capteur de vibrations (S1) et lequel est destiné à mesurer les vibrations du premier élément de vibration (V1), lequel deuxième capteur de vibrations (S2) est conçu pour générer un deuxième signal de vibration (s2) dépendant des vibrations du premier élément de vibration (V1), de telle sorte que ledit deuxième signal de vibration (s2) présente une fréquence égale à la fréquence de la composante du premier signal de vibration (s1), c'est-à-dire correspondant à la première fréquence de résonance, $f_{r1}$, ainsi qu'une différence de phase, $\Delta_{\varphi12}$, par rapport au premier signal de vibration (s1), dépendant du premier débit massique, $m_1$ ;
- au moins un deuxième élément de vibration (V2), lequel est conçu pour être mis en contact au moins temporairement avec une partie du produit et pour être amené à vibrer pendant ce temps, notamment à une fréquence de résonance ;

- au moins un deuxième excitateur de vibrations (E2) destiné à exciter en vibrations le deuxième élément de vibration (V2), de telle sorte que ledit élément de vibration (V2) exécute au moins en partie des vibrations de résonance, à savoir des vibrations mécaniques avec une deuxième fréquence de résonance, $f_{r2}$, dépendant notamment d'une densité du produit et/ou s'écartant de plus de 10 Hz de la première fréquence de résonance, $f_{r1}$ ;

- au moins un troisième capteur de vibrations (S3) destiné à mesurer les vibrations du deuxième élément de vibration (V2), lequel capteur de vibrations (S3) est conçu pour générer un troisième signal de vibration (s3) dépendant des vibrations du deuxième élément de vibration (V2) et qui présente une fréquence de signal correspondant à la deuxième fréquence de résonance, $f_{r2}$ ;

- un boîtier (H) avec une première extrémité de boîtier (H1) pouvant être raccordée à un premier segment (L11) de la conduite et avec une deuxième extrémité de boîtier (H2) pouvant être raccordée à un deuxième segment (L21) de la conduite ;

- ainsi qu'une électronique de mesure et d'exploitation (ME) formée notamment au moyen de deux modules électroniques communiquant entre eux ;

- le premier élément de vibration (V1) étant formé au moyen d'au moins deux tubes de mesure (11, 12), notamment droits et/ou montés en parallèle l'un par rapport à l'autre en terme d'écoulement, et/ou de construction identique ;

- le deuxième élément de vibration (V2) étant formé au moyen d'au moins deux tubes de mesure (21, 22) courbes, notamment montés en parallèle l'un par rapport à l'autre en terme d'écoulement, notamment de telle sorte que chacun des au moins deux tubes de mesure est monté en dérivation par rapport au premier élément de vibration (V1) en terme d'écoulement ;

- le premier élément de vibration et le deuxième élément de vibration étant tous deux logés à l'intérieur du même canal intérieur du boîtier (H) ;

- l'électronique de mesure et d'exploitation (ME) étant conçue pour générer un premier signal de commande (e1) pour le premier excitateur de vibrations (E1), lequel signal présente une fréquence correspondant à la première fréquence de résonance, $f_{r1}$, ainsi que pour générer, au moins temporairement et/ou simultanément au premier signal de commande (e1), un deuxième signal de commande (e2) pour le deuxième excitateur de vibrations (E2), lequel signal présente une fréquence correspondant à la deuxième fréquence de résonance, $f_{r2}$, de telle sorte que la fréquence du deuxième signal de commande (e2) s'écarte de plus de 10 Hz de la fréquence du premier signal de commande (e1) ;

- et l'électronique de mesure et d'exploitation (ME) étant conçue pour générer une valeur mesurée ($X_v$) représentant le débit volumétrique et/ou une valeur mesurée ($X_V$) représentant le débit volumique au moyen du premier, du deuxième et du troisième signal de vibration (s1, s2, s3), à savoir sur la base de la différence de phase, $\Delta_{\varphi 12}$, existant entre le premier et le deuxième signal de vibration et sur la base de la fréquence du troisième signal de vibration (s3).

2. Système de mesure selon la revendication 1,
   pour lequel le deuxième élément de vibration (V2) présente un canal intérieur destiné à guider le produit qui s'écoule, et lequel deuxième élément est conçu pour guider dans son canal intérieur une partie du produit qui s'écoule à un deuxième débit massique, $m_2$, et pour être amené à vibrer pendant ce temps, notamment de telle sorte que le deuxième débit massique - auquel la partie du produit guidée dans le canal intérieur du deuxième élément de vibration (V2) s'écoule - est inférieur au premier débit massique auquel la partie du produit guidée dans le canal intérieur du premier élément de vibration (V1) s'écoule.

3. Système de mesure selon la revendication précédente, comprenant en outre : au moins un quatrième capteur de vibrations (S4) espacé du troisième capteur de vibrations (S3) et destiné à mesurer les vibrations du deuxième élément de vibration (V2), lequel quatrième capteur de vibrations (S4) est conçu pour générer un quatrième signal de vibration (s4) dépendant des vibrations du deuxième élément de vibration (V2), de telle sorte que ledit quatrième signal de vibration (s4) présente une fréquence égale à la fréquence du troisième signal de vibration (s3), c'est-à-dire correspondant à la deuxième fréquence de résonance, $f_{r2}$, ainsi qu'une différence de phase, $\Delta_{\varphi 34}$, par rapport au troisième signal de vibration (s3), qui dépend du deuxième débit massique, $m_2$.

4. Système de mesure selon la revendication 3,

   - pour lequel l'électronique de mesure et d'exploitation (ME) est conçue pour générer la valeur mesurée ($X_v$) représentant le débit volumétrique, également au moyen du quatrième signal de vibration (s4), notamment sur la base de la différence de phase, $\Delta_{\varphi 34}$, existant entre le troisième et le quatrième signal de vibration (s3, s4) ;

et/ou
- pour lequel l'électronique de mesure et d'exploitation (ME) est conçue pour générer la valeur mesurée ($X_v$) représentant le débit volumique, également au moyen du quatrième signal de vibration (s4), notamment sur la base de la différence de phase, $\Delta_{\varphi 34}$, existant entre le troisième et le quatrième signal de vibration (s3, s4) ; et/ou
- pour lequel l'électronique de mesure et d'exploitation (ME) est conçue pour générer une valeur mesurée ($X_{m2}$) représentant le deuxième débit massique, $m_2$, au moyen du troisième et du quatrième signal de vibration (s3, s4), notamment sur la base de la différence de phase, $\Delta_{\varphi 34}$, existant entre le troisième et le quatrième signal de vibration.

5. Système de mesure selon la revendication 2, 3 ou 4, comprenant en outre : un dispositif de contrôle de fluide (FC) formé notamment au moyen d'une vanne à actionnement électromagnétique et/ou commandée par l'électronique de mesure et d'exploitation (ME) et/ou au moyen d'une pompe commandée par l'électronique de mesure et d'exploitation, lequel dispositif est destiné à commander le deuxième débit massique, $m_2$.

6. Système de mesure selon la revendication 1, 2, 3 ou 5,

- pour lequel le premier élément de vibration (V1) présente une section d'écoulement qui est supérieure à une section d'écoulement que présente le deuxième élément de vibration (V2) ; et/ou
- pour lequel le deuxième élément de vibration (V2) présente une résistance à l'écoulement qui est supérieure à une résistance à l'écoulement que présente le premier élément de vibration (V1).

7. Système de mesure selon l'une des revendications précédentes,

- pour lequel l'électronique de mesure et d'exploitation (ME) est conçue pour générer une valeur mesurée ($X_\rho$) représentant une densité, $\rho$, du produit au moyen du troisième signal de vibration (s3), notamment sur la base de la fréquence du troisième signal de vibration correspondant à la deuxième fréquence de résonance, $f_{r2}$ ; et/ou
- pour lequel l'électronique de mesure et d'exploitation (ME) est conçue pour générer - au moyen du premier et du deuxième signal de vibration (s1, s2), notamment sur la base de la différence de phase, $\Delta_{\varphi 12}$ existant entre le premier signal de vibration (s1) et le deuxième signal de vibration (s2) - une valeur mesurée ($X_m$ ; $X_{m1}$) représentant le premier débit massique, $m_1$ ; et/ou
- pour lequel l'électronique de mesure et d'exploitation (ME) est formée au moyen de deux modules électroniques ($ME_1$, $ME_2$) communiquant l'un avec l'autre, chacun de ces modules étant logé dans deux ou plusieurs boîtiers électroniques séparés (HE, HE') ; et/ou
- lequel système comprend en outre : un premier capteur de température (T1) en contact avec le premier élément de vibration sur un côté opposé à son canal intérieur, lequel capteur est destiné à la mesure d'une température, $\theta 1$, du premier élément de vibration (V1), lequel capteur est conçu pour générer un premier signal de température ($\theta 1$) dépendant de ladite température du premier élément de vibration, ainsi qu'un deuxième capteur de température (T2) en contact avec le deuxième élément vibration sur un côté opposé à son canal intérieur, lequel capteur est destiné à la mesure d'une température, $\theta 2$, du deuxième élément de vibration (V2), lequel capteur est conçu pour générer un deuxième signal de température ($\theta 2$) dépendant de ladite température du deuxième élément de vibration,
- l'électronique de mesure et d'exploitation étant conçue pour générer la valeur mesurée représentant le débit volumétrique au moyen du premier signal de température ($\theta 1$) et/ou au moyen du deuxième signal de température ($\theta 2$) ; et/ou
- l'électronique de mesure et d'exploitation étant conçue pour générer la valeur mesurée représentant le débit volumique au moyen du premier signal de température ($\theta 1$) et/ou au moyen du deuxième signal de température ($\theta 2$).

8. Système de mesure selon la revendication précédente, pour lequel l'électronique de mesure et d'exploitation est conçue pour générer simultanément le premier et le deuxième signal de commande (e1, e2), de telle sorte que la fréquence du deuxième signal de commande (e2) correspondant à la deuxième fréquence de résonance, $f_{r2}$, est inférieure à la fréquence du premier signal de commande (e1) correspondant à la première fréquence de résonance, $f_{r1}$, notamment de telle sorte que ladite fréquence du deuxième signal de commande (e2) correspond à moins de 90 % de la fréquence du premier signal de commande (e1).

9. Système de mesure selon l'une des revendications précédentes,

- pour lequel un bypass court-circuitant en terme d'écoulement le canal intérieur du premier élément de vibration (V1) est formé au moyen du deuxième élément de vibration (V2).

10. Système de mesure selon l'une des revendications 1 à 9,

- pour lequel le deuxième élément de vibration (V2) est raccordé à la conduite de telle sorte que son canal intérieur communique avec un canal intérieur de la conduite ; et/ou
- pour lequel le deuxième élément de vibration (V2) est raccordé à la conduite au moyen d'un premier conduit de raccordement (L21), notamment flexible et/ou coudé, et au moyen d'un deuxième conduit de raccordement (L22), notamment flexible et/ou coudé.

11. Système de mesure selon l'une des revendications précédentes,

- pour lequel la fréquence de résonance, $f_{r1}$, à laquelle le premier élément de vibration (V1) est amené à vibrer, diffère de la fréquence de résonance, $f_{r2}$, à laquelle le deuxième élément de vibration (V2) est amené à vibrer ; et/ou
- pour lequel la deuxième fréquence de résonance est inférieure à la première fréquence de résonance, notamment de telle sorte que la deuxième fréquence de résonance corresponde à moins de 90 % de la première fréquence de résonance ; et/ou
- pour lequel le premier et le deuxième élément de vibration (V1, V2) sont mécaniquement découplés l'un de l'autre, de telle sorte que chacun des deux éléments de vibration puisse vibrer indépendamment de l'autre élément de vibration respectif, et/ou de telle sorte qu'une fréquence mécanique propre la plus basse du premier élément de vibration (V1) soit différente d'une fréquence mécanique propre la plus basse du deuxième élément de vibration (V2), notamment de telle sorte que ladite fréquence mécanique propre la plus basse du premier élément de vibration soit inférieure à ladite fréquence mécanique propre la plus basse du deuxième élément de vibration ; et/ou
- pour lequel le premier élément de vibration (V1) peut être raccordé à la conduite, notamment inséré dans son parcours, de telle sorte que le canal intérieur dudit élément de vibration communique avec un canal intérieur de la conduite ; et/ou
- pour lequel le premier et le deuxième élément de vibration (V1, V2) sont conçus pour être traversés chacun simultanément par du produit.

12. Système de mesure selon l'une des revendications précédentes, pour lequel le deuxième élément de vibration (V2) est maintenu sur le boîtier (H).

13. Système de mesure selon l'une des revendications 1 à 12,

- pour lequel la première extrémité de boîtier (H1) comprend au moins une première ouverture d'écoulement ($O_{i,11}$) d'un premier type, notamment une première ouverture d'écoulement communiquant avec le premier élément de vibration (V1),
- pour lequel la deuxième extrémité de boîtier (H2) comprend au moins une première ouverture d'écoulement ($0_{i,21}$) d'un premier type, notamment une première ouverture d'écoulement communiquant avec le premier élément vibration (V1),
- pour lequel la première extrémité de boîtier (H1) comprend au moins une deuxième ouverture d'écoulement ($O_{i,12}$) d'un premier type, notamment une deuxième ouverture d'écoulement communiquant avec le premier élément de vibration (V1),
- pour lequel la deuxième extrémité de boîtier (H2) comprend au moins une deuxième ouverture d'écoulement ($O_{i,22}$) d'un premier type, notamment une deuxième ouverture d'écoulement communiquant avec le premier élément de vibration (V1),
- et pour lequel le premier élément de vibration (V1) formé au moyen d'un premier tube de mesure (11), qui présente une première extrémité de tube débouchant dans la première ouverture d'écoulement ($O_{i,11}$) d'un premier type de la première extrémité de boîtier (H1) ainsi qu'une deuxième extrémité de tube débouchant dans la première ouverture d'écoulement ($O_{i,21}$) d'un premier type de la deuxième extrémité de boîtier (H2), ainsi qu'au moyen d'un deuxième tube de mesure (21) - lequel est notamment de conception identique au premier tube de mesure (11) - qui présente une première extrémité de tube débouchant dans la deuxième ouverture d'écoulement ($O_{i,12}$) d'un premier type de la première extrémité de boîtier (H1) ainsi qu'une deuxième extrémité de tube débouchant dans la deuxième ouverture d'écoulement ($O_{i,22}$) d'un premier type de la deuxième extrémité de boîtier (H2).

**14.** Système de mesure selon la revendication 13,

- pour lequel la première extrémité de boîtier (H1) présente une ouverture d'écoulement ($O_{ii,11}$) d'un second type, notamment une ouverture d'écoulement communiquant avec le deuxième élément de vibration (V2), et
- pour lequel la deuxième extrémité de boîtier (H2) présente une ouverture d'écoulement ($O_{ii,21}$) d'un second type, notamment une ouverture d'écoulement communiquant avec le deuxième élément de vibration (V2).

**15.** Système de mesure selon l'une des revendications 13 à 14, pour lequel la première extrémité de boîtier (H1) comprend une première ouverture d'écoulement ($O_{ii,11}$) d'un second type, notamment une ouverture d'écoulement communiquant avec le deuxième élément de vibration (V2), ainsi qu'une deuxième ouverture d'écoulement ($O_{ii,21}$) d'un second type, notamment une ouverture d'écoulement communiquant également avec le deuxième élément de vibration (V2).

**Fig. 1**

*Fig. 2a*

Fig. 2b

EP 2 906 915 B1

*Fig. 3*

*Fig. 4*

**Fig. 5**

EP 2 906 915 B1

*Fig. 6*

EP 2 906 915 B1

*Fig. 7a*

*Fig. 7b*

*Fig. 8*

*Fig. 9*

EP 2 906 915 B1

## IN DER BESCHREIBUNG AUFGEFÜHRTE DOKUMENTE

**In der Beschreibung aufgeführte Patentdokumente**

- CN 101858765 A
- EP 1001254 A
- EP 816807 A
- EP 553939 A
- US 20020157479 A
- US 20060150750 A
- US 20060162468 A
- US 20070151368 A
- US 20080047361 A
- US 20100242623 A
- US 20110016991 A
- US 20110146416 A
- US 20110154914 A
- US 20110265580 A
- US 20110113896 A
- US 20120048034 A
- US 20120073384 A
- US 20120079891 A
- US 20120090407 A
- US 20120109543 A
- US 20120167697 A
- US 4777833 A
- US 4793191 A
- US 4801897 A
- US 4823614 A
- US 4879911 A
- US 5009109 A
- US 5024104 A
- US 5050439 A
- US 5370002 A
- US 5661232 A
- US 5796011 A
- US 5804741 A
- US 6311136 A
- US 6308580 B
- US 6311136 B
- US 6415668 B
- US 6711958 B
- US 6920798 B
- US 7134347 B
- US 7392709 B
- US 7992452 B
- WO 0057141 A
- WO 01067052 A
- WO 03027616 A
- WO 2008039203 A
- WO 2011008307 A
- WO 2011008308 A
- WO 2011019344 A
- WO 2011068500 A
- WO 2012028425 A
- WO 9015309 A
- WO 9015310 A
- WO 9421999 A
- WO 9605484 A
- WO 9733150 A
- WO 98038479 A
- DE 102011089808
- US 7350421 B
- WO 0129519 A
- US 20120227512 A
- US 56661232 A
- US 20100050783 A
- US 20100043569 A
- US 7921737 B
- US 7823445 B
- US 7437912 B
- US 6477901 B
- WO 2007147786 A
- EP 564682 A
- US 6845663 B